# EUROPEAN PATENT SPECIFICATION

(11) **EP 2 186 232 B1**
(45) Date of publication and mention of the grant of the patent: **08.08.2018**
(21) Application number: 08782689.7
(22) Date of filing: 08.08.2008
(51) Int. Cl.: H04W 16/14

(54) **SPECTRUM SHARING**
GEMEINSAME SPEKTRUMSNUTZUNG
PARTAGE DE SPECTRE

(30) Priority: 10.08.2007 US 955139 P; 31.07.2008 US 183835
(43) Date of publication of application: 19.05.2010
(73) Proprietor: Nokia Technologies Oy, 02610 Espoo (FI)
(72) Inventor: KERMOAL, Jean-Philippe, 2300 Copenhagen S. (DK); WIJTING, Carl, Simon, FI-00280 Helsinki (FI); DOPPLER, Klaus, FI-02200 Espoo (FI)
(74) Representative: Espatent Oy
(86) International application number: PCT/US2008/072664
(87) International publication number: WO 2009/023581

(56) References cited:
- EP-A1- 1 742 497
- EP-A1- 1 773 085
- US-A1- 2002 186 710
- US-A1- 2003 123 392
- US-A1- 2007 117 537
- US-B1- 6 456 849
- GRANDBLAISE D ET AL: "Credit Token based Rental Protocol for Dynamic Channel Allocation", COGNITIVE RADIO ORIENTED WIRELESS NETWORKS AND COMMUNICATIONS, 2006. 1 ST INTERNATIONAL CONFERENCE ON, IEEE, PI, 1 June 2006 (2006-06-01), pages 1-5, XP031091954, DOI: 10.1109/CROWNCOM.2006.363463 ISBN: 978-1-4244-0380-6
- KLOECK C ET AL: "Multi-Level Spectrum Auction Through Radio Access", ELECTROTECHNICAL CONFERENCE, 2006. MELECON 2006. IEEE MEDITERRANEAN BENALMADENA, SPAIN 16-19 MAY 2006, PISCATAWAY, NJ, USA,IEEE, 16 May 2006 (2006-05-16), pages 591-594, XP010927823, DOI: 10.1109/MELCON.2006.1653170 ISBN: 978-1-4244-0087-4

## Description

### PRIORITY CLAIM

### TECHNICAL FIELD

This description relates to wireless networks.

### BACKGROUND

Wireless networks may use spectral resources, such as different time slots, frequencies or carriers or subcarriers, or other spectral resources. More than one wireless network may be present in a geographical location. These networks may be of the same radio technology or of different radio technologies and may operate in the same frequency band. Thus, the spectrum resources can potentially be shared among these wireless networks. Different wireless networks typically use different resources to decrease interference. However, spectral resources available to a wireless network may not always be allocated to make efficient use of the resources. For example, the spectral resources allocated to each wireless network may not always correspond to the wireless network's load.

EP 1742497 discloses an apparatus for resource sharing between a plurality of communication networks each having a nominal resource allocation of a shared air interface and a resource exchange allowance. The network, which has the highest resource exchange offer value, is selected. US 6456849 discloses allocation of communication resources between cells of a cellular network. Grandblaise D. et al.: "Credit Token based Rental Protocol for Dynamic Channel Allocation", Cognitive Radio Oriented Wireless Networks and Communications, 2006, 1st International Conference on, IEEE, PI, 1 June 2006, describes a wireless node sending an advertisement indicating availability of resources.

Kloeck C. et al.: "Multi-Level Spectrum Auction Through Radio Access", Electrotechnical Conference, 2006, Melecon 2006, IEEE PI, NJ, USA, IEEE, 16 May 2006, describes a primary base station advertising about an auction for renting some resources.

### SUMMARY

The invention is set out in the appended set of claims. The embodiments and/or examples of the following summary and description which are not covered by the appended claims are considered as not being part of the present invention.

According to one example embodiment, a method may include determining, by a first wireless node in a first wireless network, that spectral resource needs for the first wireless network exceed spectral resources currently available for the first wireless network. The method may further include sending, to a second wireless node in a second wireless network, a request to borrow one or more of the resource units, the request being based on the determining.

According to another example embodiment, a method may include determining, by a first wireless node in a first wireless network, that currently available spectral resources exceed spectral resource needs for the first wireless network. The method may further include sending, to a second wireless node in a second wireless network, an advertisement to lend one or more resource units, the advertisement being based on the determining. The method may further include receiving, from the second wireless node, a request to borrow one or more of the one or more resource units.

According to another example embodiment, a method may include determining, by a first wireless node in a first wireless network, that spectral resource needs exceed currently available spectral resources. The method may further include receiving, from a second wireless node in a second wireless network, a first spectral resource change map offering to loan one or more resource units. The method may further include sending, to the second wireless node, a second spectral resource change map requesting to borrow one or more resource units based on the determining. The method may further include receiving, from the second wireless node, a first negotiation resource unit map, the first negotiation resource unit map having been sent to the first wireless node in response to the second spectral resource change map and indicating resource units which the second wireless network may loan to the first wireless network. The method may further include sending, to the second wireless node, a second negotiation resource unit map, the second negotiation resource unit map being sent in response to receiving the first spectral resource change map and indicating resource units which the first wireless network may borrow from the second wireless network, the indicated resource units which the first wireless network may borrow being based at least in part on the currently available spectral resources.

According to another example embodiment, a method may include determining, by a first wireless node in a first wireless network, that currently available spectral resources exceed spectral resource needs. The method may further include receiving, from a second wireless node in a second wireless network, a first spectral resource change map requesting to borrow one or more resource units. The method may further include sending, to the second wireless node, a second spectral resource change map offering to loan one or more resource units based on the determining. The method may further include receiving, from the second wireless node, a first negotiation resource unit map, the first negotiation resource unit map having been sent to the first wireless node in response to the second spectral resource change map and indicating resource units which the second wireless network may borrow from the first wireless network. The method may further include sending, to the second wireless node, a second negotiation resource unit map, the second negotiation resource unit map being sent in response to receiving the first spectral resource change map and indicating resource units which the first wireless network may loan to the second wireless network, the indicated resource units which the first wireless network may borrow being based at least in part on the currently available spectral resources.

According to another example embodiment, an apparatus may include a controller. The apparatus may be configured to determine, by a first wireless node in a first wireless network, that spectral resource needs for the first wireless network exceed spectral resources currently available for the first wireless network, to receive, from a second wireless node in a second wireless network, an advertisement indicating availability of one or more resource units, and to send, to the second wireless node, a request to borrow one or more of the one or more resource units.

According to another example embodiment, an apparatus may include a controller. The apparatus may be configured to determine, by a first wireless node in a first wireless network, that currently available spectral resources exceed spectral resource needs, to send, to a second wireless node in a second wireless network, an advertisement to lend one or more resource units, and to receive a request to borrow one or more of the one or more resource units.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram showing two wireless networks according to an example embodiment.
FIG. 2A is a vertical-time sequence diagram showing messages sent between, and processes performed by, a first wireless node and a second wireless node, according to an example embodiment.
FIG. 2B is a vertical-time sequence diagram showing messages sent between, and processes performed by, the first wireless node and the second wireless node, according to another example embodiment.
FIG. 2C is a vertical-time sequence diagram showing messages sent between, and processes performed by, the first wireless node and the second wireless node, according to another example embodiment.
FIG. 3 is a block diagram of a resource unit map according to an example embodiment.
FIG. 4 is a flowchart of a spectrum sharing sub-function according to an example embodiment.
FIG. 5 is a flowchart of a sub-function for identifying resource units for release according to an example embodiment.
FIG. 6 is a flowchart of a sub-function for identifying needed resource units according to an example embodiment
FIG. 7 is a flowchart of a sub-function for creating spectrum resource change messages according to an example embodiment.
FIG. 8 is a flowchart of a sub-function for negotiating exchange of resource units according to an example embodiment.
FIG. 9 is a flowchart of a sub-function for investigating advertisements or requests according to an example embodiment.
FIG. 10 is a flowchart of a sub-function for selecting interesting technically feasible resource unit allocations according to an example embodiment.
FIG. 11 is a flowchart showing a method according to an example embodiment.
FIG. 12 is a flowchart showing another method according to another example embodiment.
FIG. 13 is a flowchart showing another method according to another example embodiment.
FIG. 14 is a flowchart showing another method according to another example embodiment.
FIG. 15 is a flowchart showing another method according to another example embodiment.
FIG 16 is a block diagram showing an apparatus according to an example embodiment.

### DETAILED DESCRIPTION

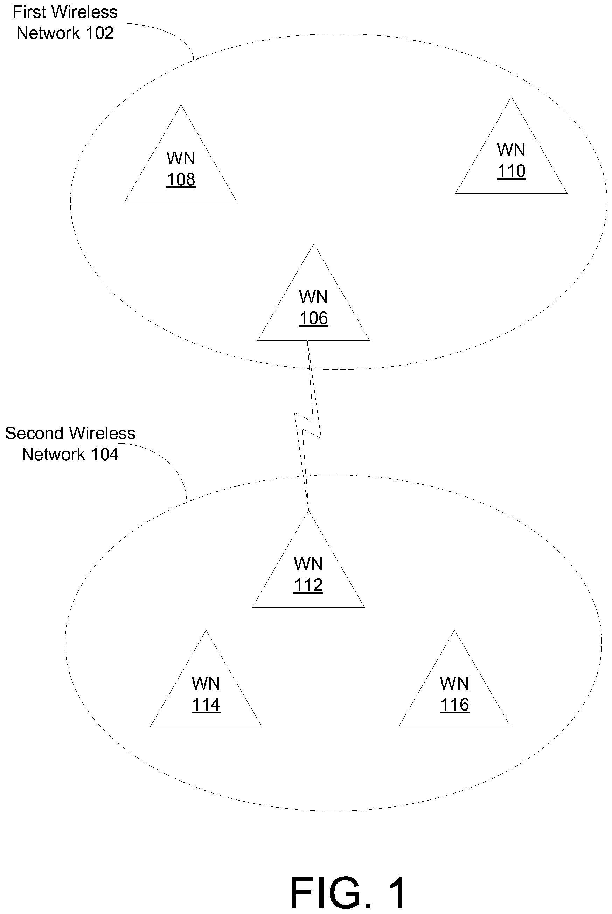

FIG. 1 is a block diagram showing two wireless networks 102, 104 according to an example embodiment. The first wireless network 102 may include a first wireless node 106 and a plurality of other wireless nodes 108, 110. The wireless nodes 106, 108, 110 in the first wireless network 102 may include, for example, base stations, node Bs, gateways, relay stations, or access points. The wireless nodes 106, 108, 110 may serve a plurality of mobile nodes (not shown) such as cellular telephones, WLAN (wireless local area network) devices, WiMAX devices, smartphones, personal digital assistants (PDAs), or laptop or notebook computers, such as by communicating with the mobile nodes via an air interface, according to various example embodiments.

The second wireless network 104 may include a second wireless node 112 and a plurality of other wireless nodes 114, 116. These wireless nodes 112, 114, 116 may also include base stations, node Bs, gateways, relay stations, or access points, according to various example embodiments. The wireless nodes 112, 114, 116 may serve a plurality of mobile nodes such as cellular telephones, WLAN (wireless local area network) devices, WiMAX devices, smartphones, PDAs, or laptop or notebook computers.

The first wireless network 102 and second wireless network 104 may occupy or serve overlapping geographical areas. To avoid interference between the wireless networks 102, 104, each wireless network 102, 104 may be allocated distinct spectral resources. The spectral resources may be allocated to the wireless networks 102, 104 by regulation, by auction, or by agreement between operators of the wireless networks 102, 104, according to example embodiments. Spectral resources may be measured or represented in units of bandwidth (e.g., Hz), time slots (or time), or other units, and may also take into consideration the frequency of the bands, a level of fragmentation, or location of the wireless nodes.

The load on the wireless networks 102, 104 created by exchanging data with the mobile nodes may vary in time and/or location. For example, the first wireless network 102, may at one time have spectral resource needs, e.g., caused by the load on the first wireless network 102, that exceed the spectral resources currently available to the first wireless network 102, and may at another time have available spectral resources which exceed the spectral resource needs for the wireless network 102. The second wireless network 104, or other wireless networks (not shown), may also have varying spectral resource needs. Accordingly, it may be desirable for the wireless networks 102, 104 to share or exchange spectral resources to accommodate varying spectral resource needs, and to allow a more efficient use of the available resources.

The spectral resource needs may be current or projected. Current spectral resource needs may reflect current load or demand on the network; for example, mobile nodes within the first wireless network 102 may be requesting transfer of data with the wireless nodes 106, 108, 110 which exceed the currently available spectral resources. Projected spectral resource needs may be based on past network loads, such as based on network loads during certain days of the week or certain hours of the day, or based on a number of subscribers within a geographical area served by the first wireless network 102.

Spectral resources may be assigned or exchanged according to long term schemes or short term schemes. Long term schemes may negotiate spectral resources over a longer time scale, and/or may negotiate or assign the spectral resources within multiple network operators. Long term schemes may take into account load prediction or estimates of network load, vertical sharing (information about spectrum availability based on priorities between technologies), a spectrum register with information on exclusion zones or spectrum sharing functions, and/or a spectrum manager that oversees spectrum usage (such as the Spectrum Manager as defined by the IST-WINNER project).

Short term schemes may negotiate smaller amounts of spectral resources, and/or, for example, may negotiate or assign the spectral resources at the cell level. Short term schemes may incur lower signaling and/or processing overhead than long term schemes, according to an example embodiment Short term schemes may take into account the long term scheme, vertical sharing, horizontal sharing or information about spectrum availability with no priority between technologies, the spectrum register, and/or a constraint processor. The constraint processor may provide information about the technical feasibility of borrowing or lending spectral resources or resource units, such as information from the physical layer on the usability of chunks of spectral resources or predefined spectral chunk patterns, or information about radio channel conditions or average attainable spectral efficiency.

A node, such as the first wireless node 106, may determine spectral resource needs of a network such as the first wireless network 102 (or other radio access network), based on the factors taken into account by the long term scheme and/or short term scheme. The first wireless node 106 may add a margin to the determined spectral resource needs. The margin may be a fixed percentage, such as ten, fifteen, or twenty percent, and may account for inaccuracies in the load prediction, spikes in the load, guard bands, and/or for reserving additional spectral resources. The first wireless node 106 may determine its spectral resource needs based on the determined spectral resource needs plus the margin, according to an example embodiment.

The first wireless node 106 may compare the first wireless network's 102 spectral resource needs to its currently available spectral resources. If the first wireless node 106 determines that the first wireless network's 102 spectral resource needs exceed the first wireless network's 102 currently available spectral resources, the first wireless node 106 may seek to borrow spectral resources for the first wireless network 102 from another wireless network, such as the second wireless network 104. If the first wireless node 106 determines that the first wireless network's 102 currently available spectral resources exceed the first wireless network's 102 spectral resource needs, then the first wireless node 106 may seek to lend (or make available for lending) some of the first wireless network's 102 spectral resources to another wireless network, such as the second wireless network 104. If the first wireless node 106 determines that the first wireless network's 102 currently available spectral resources are just sufficient to meet the first wireless network's 102 spectral needs, then the first wireless node 106 may not seek to lend or borrow spectral resources on behalf of the first wireless network 102. According to an example embodiment, the spectral resources may be broken into resource units; the wireless networks 102, 104 may lend or borrow resource units to each other.

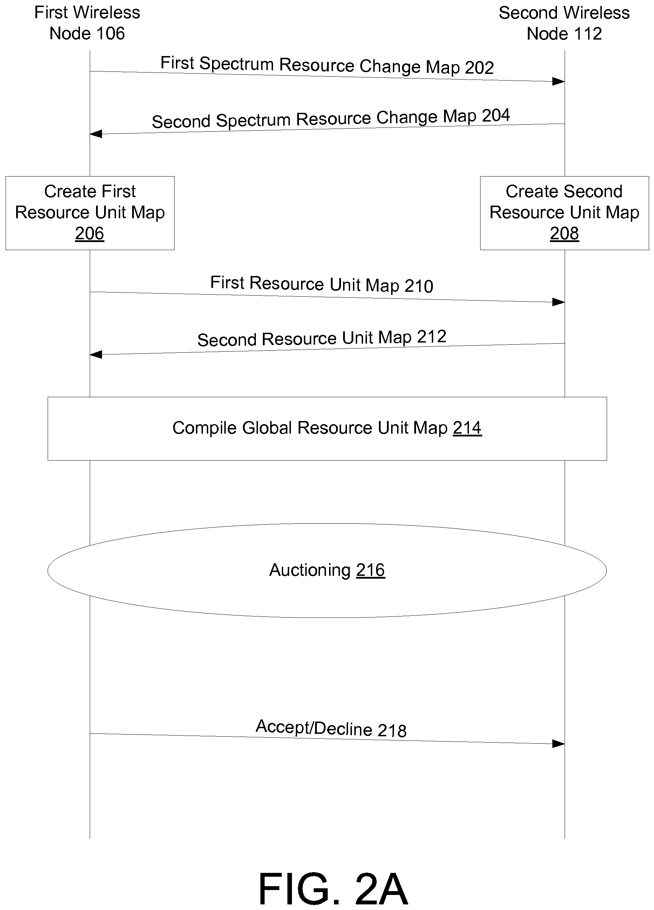

FIG. 2A is a vertical-time sequence diagram showing messages sent between, and processes performed by, the first wireless node 106 and the second wireless node 112, according to an example embodiment. These messages or processes may be sent or performed as part of either the long term scheme or the short term scheme, according to an example embodiment.

In the example shown in FIG. 2A, the first wireless node 106 may have determined that spectral resource needs for the first wireless network 102 exceed spectral resources currently available to the first wireless network 102, and the second wireless node 112 may have determined that currently available spectral resources exceed spectral resource needs for the second wireless network 104. Based on these determinations, the first wireless node 106 may send to the second wireless node 112a request to borrow spectral resources, such as spectral resources in the form of resource units, and the second wireless node 112 may send to the first wireless node an advertisement indicating availability of spectral resources such as one or more resource units.

The request and/or advertisement may include spectrum resource change maps (SRCs) 202, 204, according to an example embodiment. For example, the first SRC 202 may include one or more requests for new contracts for spectral resources, one or more requests to renew contracts for spectral resources, and/or one or more cancellations of contracts for spectral resources. According to this example, the second SRC 202 may include one or more advertisements or offers of new contracts for spectral resources, one or more offers to renew contracts for spectral resources, and/or one or more cancellations of contracts for spectral resources. While FIG. 2A shows the first wireless node 106 sending the first SRC 202 before the second wireless node 112 sends the second SRC 204, the second wireless node 112 may send the second SRC 204 first, or the SRCs 202, 204 may be sent simultaneously, according to various example embodiments.

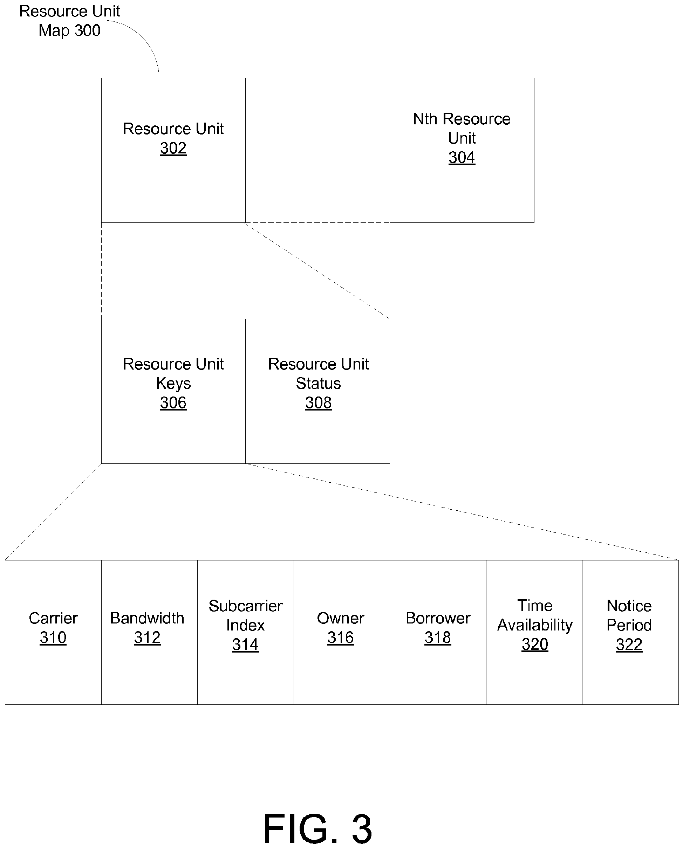

The SRCs 202, 204 may indicate a status for each of one or more resource units, according to an example embodiment. The properties of resource units are discussed in further detail with reference to FIG. 3. According to another example embodiment, the SRCs 202, 204 may not indicate statuses for particular resource units, but may indicate a request or advertisement for spectral resources, and may include a measure of spectral resources requested or advertised, such as in bandwidth.

According to an example embodiment, the second wireless node 112 may not send the advertisement or SRC 204 to the first wireless node 106. In this example, the following processes may be performed in response to the first wireless node 102 sending the request or SRC 202 to the second wireless node 112.

The first wireless node 106 and the second wireless node 112 may each create resource units maps (206, 208), which may be considered negotiation resource unit maps, according to an example embodiment. For example, the first wireless node 106 may create a first resource unit map (206) which indicates resource units that are occupied or allocated within the first wireless network 102, resource units which are reserved as part of the first wireless network's 102 margin, resource units which are considered for borrowing by the first wireless network 102, resource units which are not considered for borrowing by the first wireless network 102, and resource units which are cancelled, meaning that the first wireless network 102 will not renew a contract to borrow the resource unit

Similarly, the second wireless node 112 may also create a second resource unit map (208). For example, the second resource unit map may indicate resource units which are occupied and not available for lending, resource units which are reserved as part of the margin and not available for lending, resource units which the second wireless network 104 would consider lending, resource units which are not considered for lending, and resource units which are cancelled, meaning that the second wireless network 104 will not renew a contract to lend the resource unit.

The first wireless node 106 may send the first resource unit map 210 to the second wireless node 112, and the second wireless node may send the second resource unit map 212 to the first wireless node 106. While FIG 2A shows the first wireless node 106 sending the first resource unit map 210 before the second wireless node 112 sends the second resource unit map 212, the second wireless node 112 may send the second resource unit map 212 first, or the resource unit maps 210, 212 may be sent simultaneously, according to example embodiments.

In an example embodiment, one or more of the wireless networks 106, 112 may not wish to divulge how it allocates its spectral resources. In this example, the resource unit maps 210, 212 may not indicate whether a resource unit is occupied or reserved, and instead may simply indicate whether the resource units are available or desired for lending or borrowing, respectively.

In another example embodiment, the process of sending SRCs 202, 204 and sending resource unit maps 210, 212 may be combined. In this example, instead of separately sending the SRCs, the wireless nodes 106, 112 may send only the resource units maps 210, 212.

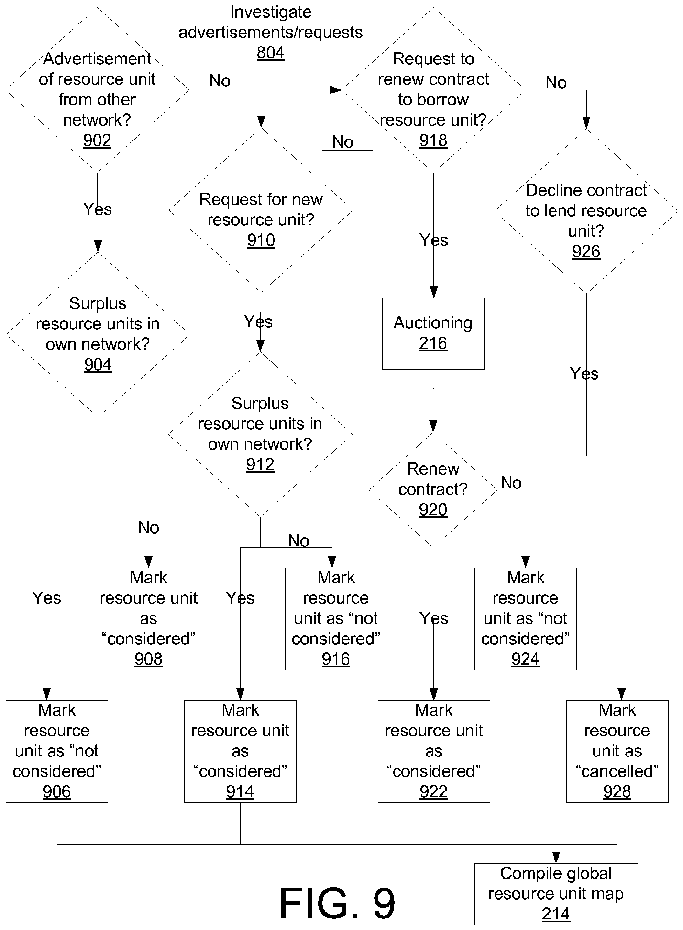

The wireless nodes 106, 112 may each compile global resource unit maps (214). The global resource maps may be compiled based on the currently available spectral resources for each wireless network 102, 104, the received advertisement or request (such as the SRC 202, 204 or resource unit map 210, 212), and/or based on spectral resources which will be retrieved upon expiration of a contract within a specified time period. The global resource map may identify spectral resource units, such as by frequency band, and may indicate a status of each spectral resource unit, such as whether the spectral resource units are occupied, reserved, available for lending, considered for borrowing, and/or that a contract to lend or borrow the spectral resource unit will or will not be renewed. An example method for compiling the global resource map is discussed further with reference to FIG. 9.

After compiling the global resource map (214), the wireless nodes 106, 112 may engage in an auctioning (216) or billing procedure, according to an example embodiment. The auctioning (216) may include negotiating or bidding for the prices of resource units, for example. The auctioning (216) may also include negotiating or bidding for other terms of contracts for resource units, such as length of the contracts, notice period for termination of the contracts, and/or a price or penalty to be paid for cancelling the contracts.

Based on the auctioning (216), the first wireless node 106 may determine whether to accept or decline a contract to borrow spectral resource units. In determining whether to accept or decline the contract, the first wireless node 106 may consider factors such as the price to borrow the spectral resource units, the load on the first wireless network 102, and/or cost expectations for not serving the load on the first network 102. Based on the determining, the first wireless node 106 may send an accept or decline message 218 to the second wireless node 112. In an example embodiment, the second wireless node 112 may send an acknowledgment message to the first wireless node 106 acknowledging receipt of the accept or decline message 218. If the contract to borrow one or more spectral resource units was accepted by the first wireless node 106 on behalf of the first wireless network 102, then the first wireless network 102 may use the spectral resources represented by the spectral resource units for the contracted time period, and the second wireless network may cease using these spectral resources for the specified time period, according to an example embodiment.

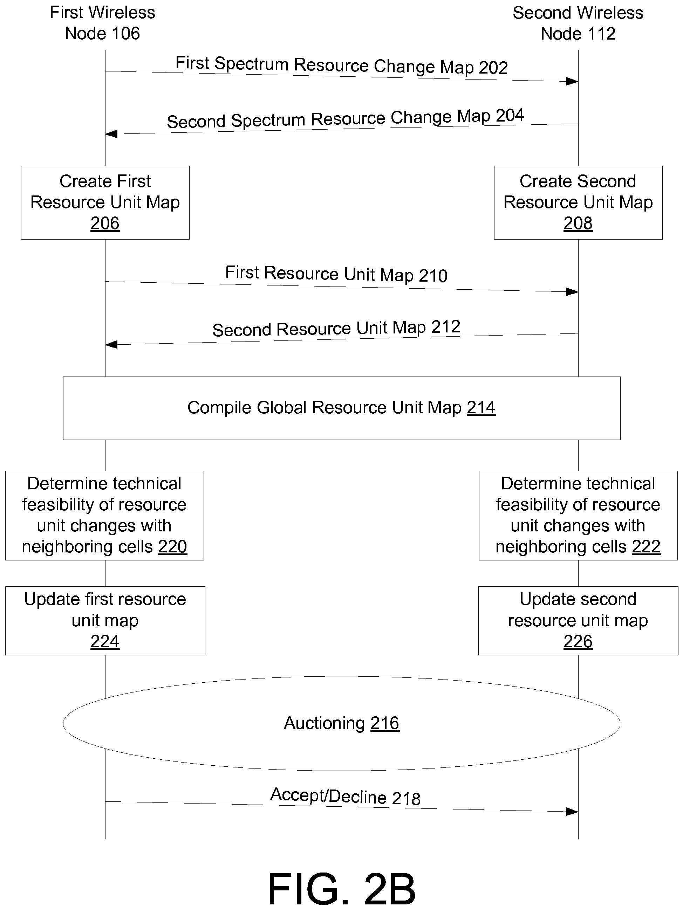

FIG. 2B is a vertical-time sequence diagram showing messages sent between, and processes performed by, the first wireless node 102 and the second wireless node 112, according to another example embodiment. This example, which may include the additional processes of determining technical feasibility of the resource unit changes (such as borrowing or lending resource units) with neighboring cells (220, 222), and/or updating the resource maps (224, 226), may be performed as part of the long term scheme, according to an example embodiment.

For example, the first wireless node 106 may determine the technical feasibility of borrowing resource units with neighboring cells (220) by determining whether the total resulting spectrum would be too fragmented to maintain guard bands, whether neighboring wireless nodes 108, 110 are already using adjacent spectra, which could result in interference, and/or whether the resulting spectrum would include an even number of subcarriers (if using orthogonal frequency division multiplexing, for example) The first wireless node 106 may exchange signals with some or all of the other wireless nodes 108, 110 in the first wireless network 102 as part of determining the technical feasibility of borrowing resource units, according to an example embodiment. The determined technical feasibility may indicate whether the first wireless network 102 could meet the spectral resource needs of the first wireless network 102 needs after borrowing the resource units from the second wireless network 104.

The second wireless node 112 may determine the technical feasibility of lending resource units with neighboring cells (222) by determining whether the resulting spectrum would be too fragmented to maintain guard bands, or whether the resulting spectrum would include an even number of subcarriers, according to an example embodiment. The second wireless node 112 may exchange signals with some or all of the other wireless nodes 114, 116 in the second wireless network 104 as part of determining the technical feasibility of lending resource units, according to an example embodiment. The determined technical feasibility may indicate whether the second wireless network 104 could still meet the spectral resource needs of the second wireless network 104 after lending the resource units to the first wireless network 102.

The first wireless node 106 may update the first resource unit map (224), such as based on the determined technical feasibility of borrowing resource units. For example, if the first wireless node 106 determined that the first wireless network 102 could not meet its spectral resource needs by borrowing certain resource units, then the status of these resource units may be changed from considered to not considered.

Similarly, the second wireless node may update its second resource map (226), such as based on the determined technical feasibility of lending resource units. For example, if the second wireless node 106 determined that the second wireless network 104 could not meet its spectral resource needs by lending certain spectral resource units, then the status of these resource units may be changed from considered to not considered.

The wireless nodes 106, 112 may engage in auctioning for the resource units based on the updated resource unit maps, according to an example embodiment.

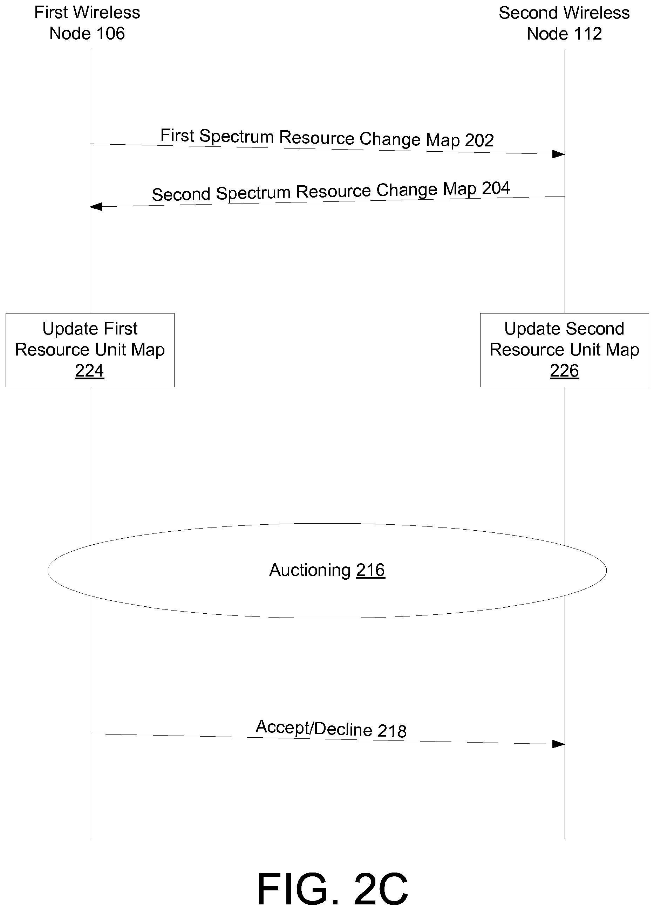

FIG. 2C is a vertical-time sequence diagram showing messages sent between, and processes performed by, the first wireless node 106 and the second wireless node 112, according to another example embodiment. These messages may be sent and processes performed according to the short term scheme, according to an example embodiment. According to an example embodiment, the messages may be sent and processes performed as shown in FIG. 2C multiple times for each time the messages are sent and processes performed as shown in FIG. 2B.

According to this example, the resource unit maps may have already been created by the wireless nodes 106, 112. Also, the technical feasibility of certain resource unit allocations may have already been determined, which may obviate the need for signaling with other wireless nodes 108, 110, 114, 116 within the respective wireless networks 102, 104.

In an example embodiment, the sent SRCs 202, 204 may include only an indication of the amount of spectral resources needed to borrow or available to lend, such as a measure of spectral resources, which may be represented by a bandwidth requirement or bandwidth available. The wireless nodes 106, 112 may update their resource unit maps (224, 226) by, for example, selecting resources units which the wireless nodes 106, 112 would consider borrowing or lending based on received SRCs 202, 204, according to an example embodiment. The wireless nodes 106, 112 may then engage in auctioning for the resource units (216), and the first wireless node 106 may send an accept or decline message 218 to the second wireless node 112.

FIG. 3 is a block diagram of a resource unit map 300 according to an example embodiment. The resource unit map 300 may include a plurality of fields corresponding to a plurality of resource units mapped by the resource unit map 300, according to an example embodiment. For example, the resource unit map 300 may include a resource unit field 302 through an Nth resource unit field 304, where 'N' is the number of resource units indicated by the resource unit map 300.

Each resource unit field 302 may include a plurality of subfields, such as a resource unit keys subfield 306 and a resource unit status subfield 308, according to an example embodiment. The resource unit keys subfield 306 may include a number of subfields.

Some or all of the subfields shown in FIG. 3 may be included in the resource unit keys subfield 306. For example, the resource unit keys subfield 306 may include a carrier subfield 310 which may indicate a carrier frequency of the resource unit, such as in units of Hertz. The resource unit keys subfield 306 may also include a bandwidth subfield 312, which may indicate a bandwidth of the resource unit, such as in units of Hertz. The resource unit keys subfield 306 may also include a subcarrier index subfield 314, which may indicate a subcarrier index or number, such as where the wireless nodes 106, 112 are using OFDM. The resource unit keys subfield 306 may also include an owner subfield 316, which may indicate a name of an owner of the resource unit (which may be a wireless network 102, 104), and a borrower subfield 318, which may indicate a name of a borrower of the resource unit (which may be a wireless network 102, 104). The resource unit keys subfield 306 may also include a time availability subfield 320, which may indicate a time for which the resource unit may be available for lending for which the resource unit must be available for borrowing. The resource unit keys subfield 306 may also include a notice period subfield 322, which may indicate a required or desired notice period for cancelling a contract to borrow or lend the resource unit.

The resource unit status subfield 308 may indicate any of a number of predefined statuses. According to an example embodiment, the predefined states may include 'occupied,' 'reserved,' 'considered,' 'not considered,' and 'cancelled.' According to this example, the occupied status may indicate that the resource unit is allocated within the network 102, 104, and not available for lending. The reserved status may indicate that the resource unit is reserved as part of the network's 102, 104 margin, and not available for lending. The considered status may indicate that the wireless node 106, 112 would consider borrowing or lending the resource unit (depending on whether the spectral resource needs exceed or are exceeded by the currently available spectral resources). The not considered status may indicate that the wireless node 106, 112 will not consider borrowing or lending the resource unit. The cancelled status may indicate that a previous contract for borrowing or lending the resource unit will be canceled (the contract may be with a wireless node 106, 112 to which the resource unit map 300 was sent, or with a third-party radio access network). While five predefined statuses have been described in this example, other example embodiments may use less than all of these statuses, or may define other statuses for the resource units.

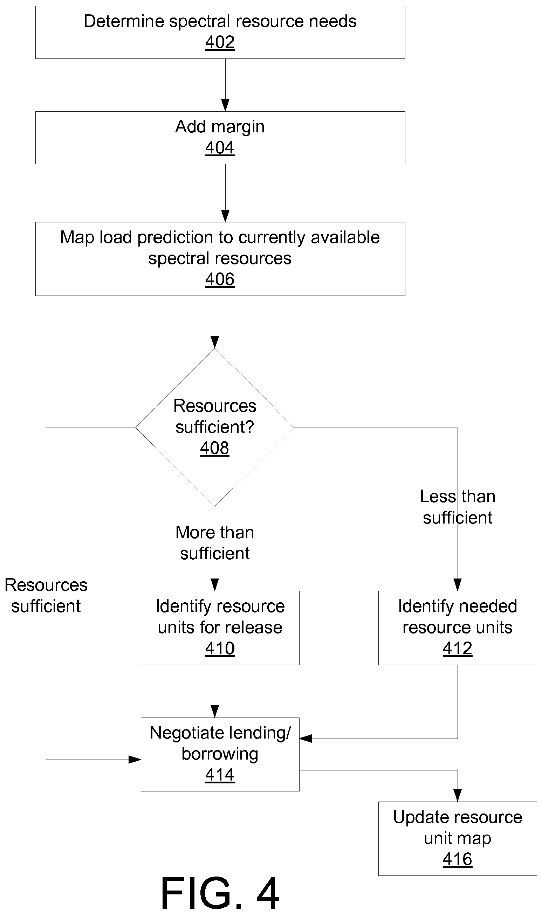

FIG. 4 is a flowchart of a spectrum sharing sub-function according to an example embodiment. According to this example, a wireless node 106, 112 may determine spectral resource needs (402). The wireless node 106, 112 may determine current or projected spectral resource needs, according to example embodiments. Current spectral resource needs may reflect current load or demand on the wireless network 102, 104, such as requests for transfer of data by the wireless nodes 106, 108, 110, 112, 114, 116. Projected spectral resource needs may be based on past network loads, such as based on network loads during certain days of the week or certain hours of the day, or based on a number of subscribers within a geographical area served by the first wireless network 102.

The wireless node 106, 112 may add a margin to the determined spectral resource needs (404). The margin may be a fixed percentage, such as ten, fifteen, or twenty percent, and may account for inaccuracies in the load prediction, spikes in the load, guard bands, and/or for reserving additional spectral resources.

The wireless node 106, 112 may map the load prediction to currently available spectral resources (406). For example, the wireless node 106, 112 may compare the load prediction, which may be based on the determined spectral resource needs plus the margin, to the currently available spectral resources. The currently available spectral resources may include spectral resources allocated to or owned by the wireless node 106, 112, plus or minus spectral resources borrowed or lent by the wireless node 106, 112.

The wireless node 106, 112 may determine whether the available spectral resources are sufficient to meet the predicted load (408). The wireless node 106, 112 may determine whether the available spectral resources are sufficient to meet the predicted load based, for example, on the load prediction being mapped to the currently available spectral resources.

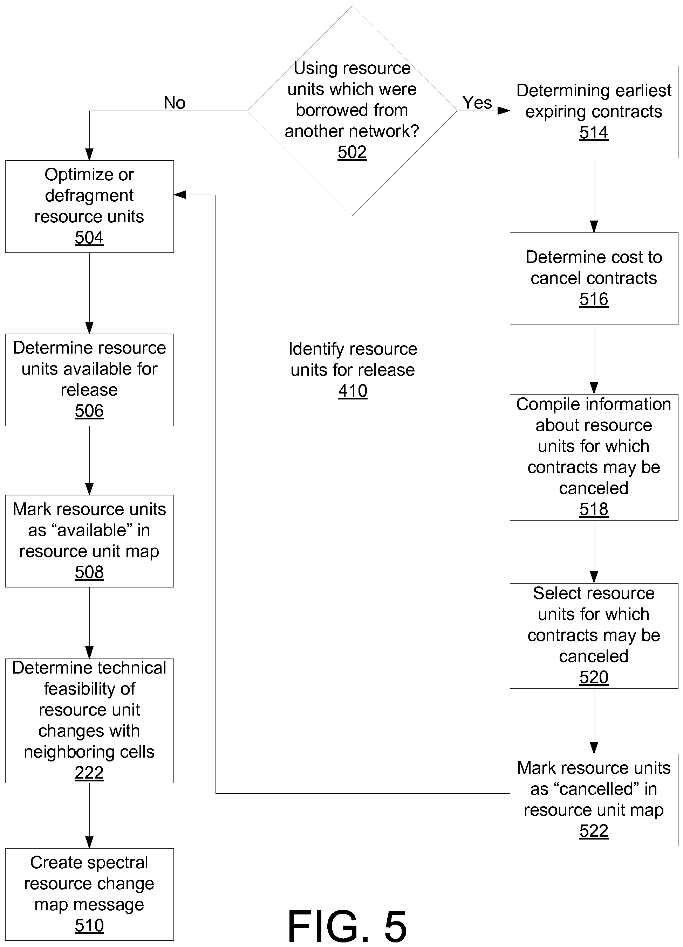

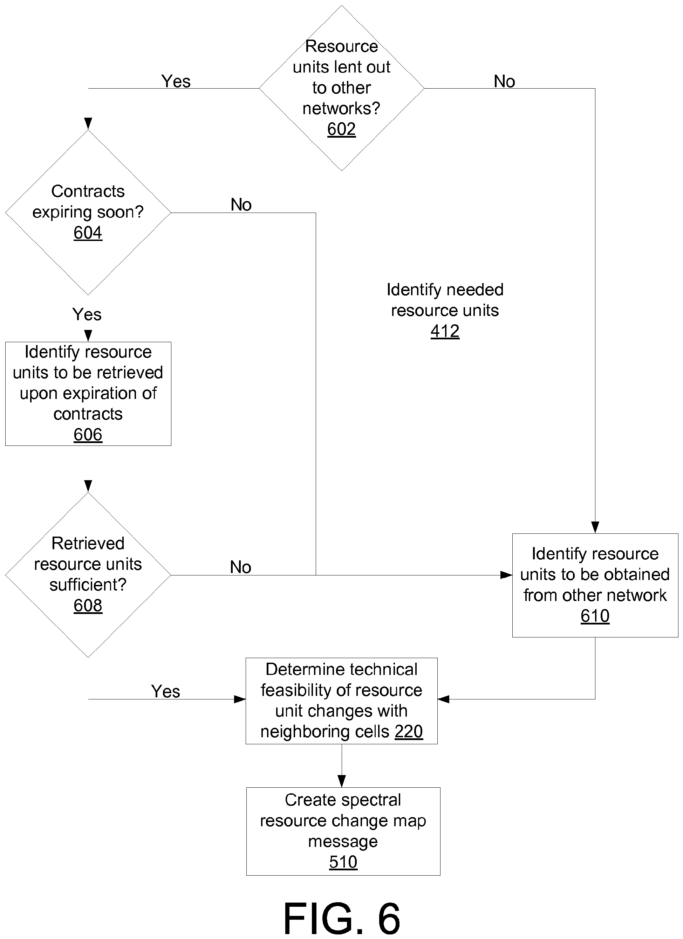

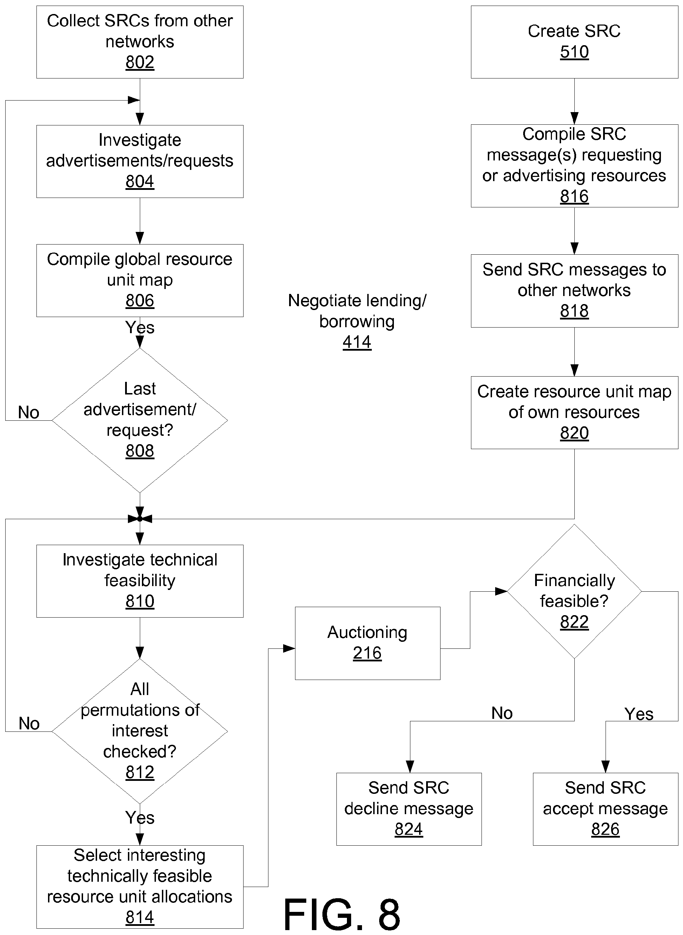

If the currently available spectral resources are more than sufficient to meet the predicted load, the wireless node 106, 112 may identify resource units for release or lending (410). The identification of resource units for release (410) is described with reference to FIG. 5. The wireless node 106, 112 may then negotiate lending or borrowing of resource units (414). The negotiation of lending or borrowing of resource units is discussed with reference to FIG. 8. If the currently available spectral resources are less than sufficient to meet the predicted load, the wireless node 106, 112 may identify needed resource units (412). The identification of needed resource units is discussed with reference to FIG. 6. After identifying the needed resource units, the wireless node 106, 112 may negotiate the lending or borrowing of resource units. If the currently available spectral resources are sufficient to meet the predicted load, the wireless node 106, 112 may negotiate the lending or borrowing of resource units (414), or may determine not to lend or borrow any resource units, according to an example embodiment.

After negotiating the lending or borrowing of resource units (414), the wireless node 106, 112 may update the resource unit map 300 (416). The wireless node 106, 112 may update the resource unit map 300 (416) based on the negotiations for lending or borrowing resource units (414). For example, the resource unit map 300 may indicate which resource units have been lent or borrowed, and the term or length of lending or borrowing.

FIG. 5 is a flowchart of the sub-function for identifying resource units for release (410) according to an example embodiment. According to this example, the wireless node 106, 112 may determine whether its wireless network 102, 104 is using resource units which were borrowed from another wireless network 102, 104 (502). If the wireless node's 106, 112 wireless network 102, 104 is not using resource units which were borrowed from another network, the wireless node 106, 112 may optimize or defragment its wireless network's 102, 104 resource units (504). The wireless node 106, 112 may optimize or defragment the resource units (504) by, for example, organizing the resource units into as few chunks or blocks as possible.

If the wireless node's 106, 112 wireless network 102, 104 is using resource units which were borrowed from another wireless network 102, 104, then the wireless node 106, 112 may determine the earliest expiring contracts (514). For example, the wireless node 106, 112 may determine which contracts to borrow resource units will expire first. Determining the earliest expiring contracts (514) may provide information about how soon the borrowed resource units may be released to the originating wireless network 102, 104 (such as a radio access network), which may be the owner of the resource units. The wireless node 106, 112 may also determine a cost to cancel the contracts (516). The contracts may, for example, include an early termination fee or cancellation fee for cancelling the contract before their expiration.

After determining the earliest expiring contracts (514) and determining the cost to cancel contracts (516), the wireless node 106, 112 may compile information about resource units for which contracts may be canceled (518). For example, the wireless node 106, 112 may compile a list of resource units for which contracts may be cancelled, how soon the contracts may be cancelled (with or without an early termination fee), and/or a cost associated with cancelling the contract for each resource unit. Based on the compiled information, the wireless node 106, 112 may select resource units for which contracts may be cancelled (520). The wireless node 106, 112 may, for example select the resource units for cancellation based on a sorting algorithm to minimize the cost of cancelling the contracts. The complexity of the sorting algorithm may be limited by time and/or size constraints, according to an example embodiment. After selecting the resource units, the wireless node 106, 112 may mark the resource units as 'cancelled' on the resource unit map 300 (522). After marking the resource units as 'cancelled,' the wireless node may optimize or defragment the resource units (504).

After optimizing or defragmenting the resource units (504), the wireless node 106, 112 may determine the resource units available for release (506). The wireless node 106, 112 may determine a number of resource units available for release by subtracting a number of resource units needed (which may be based on the spectral resource needs plus the margin) from the currently available spectral resources. The wireless node 106, 112 may determine which resource units may be released based on, for example, the optimizing or defragmenting the resource units (504). After determining which resource units are available for release or lending (506), the wireless node 106, 112 may mark these resource units as 'available' or 'considered' on the resource unit map 300 (508).

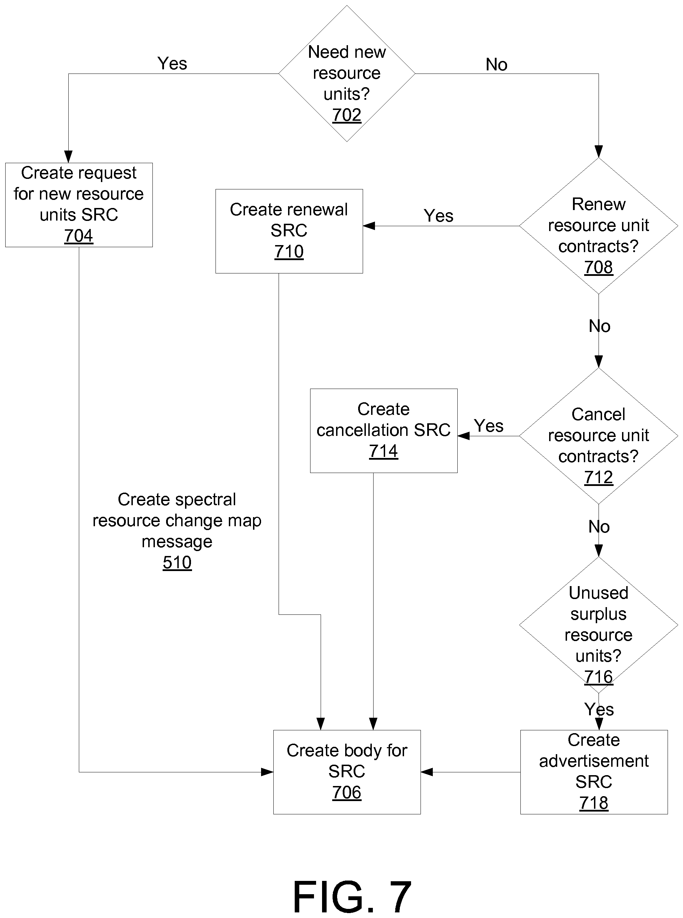

The wireless node 106, 112 may determine the technical feasibility of the resource unit changes (in this case lending the resource units) with neighboring cells (222). After checking the feasibility of the resource unit changes with neighboring cells (510), the wireless node 106, 112 may have determined which of its own resource units are available for negotiation, and which may be returned to the originating wireless network 102, 104 (or other radio access network), and may create a spectral resource change map message (SRC) 202, 204 (512). The creation of an SRC 202, 204 is described with reference to FIG 7.

FIG 6 is a flowchart of the sub-function for identifying needed resource units (412) according to an example embodiment. The wireless node 106, 112 may determine whether resource units have been lent out by its wireless network 102, 104 to other networks 102, 104 (or other radio access network) (602). If no resource units have been lent out to other networks, the wireless node 106, 112 may identify resource units to be obtained from the other wireless network 102, 104 (610). The wireless node 106, 112 may identify resource units to be obtained from the other wireless network 102, 104 based on, for example, its own spectral resource needs and its own resource unit map 300, which may indicate which of the other wireless network's 102, 104 resource units are available or 'considered' for lending. After identifying the resource units to be obtained from the other network 102, 104 (610), the wireless node 106, 112 may determine the technical feasibility of the resource unit changes (in this case borrowing the resource units) with neighboring cells (220).

If the wireless node 106, 112 determines that resource units have been lent out to other wireless networks, the wireless node 106, 112 may determine whether any of the contracts to loan the resource units are expiring soon (604), such as within a predetermined time period. If none of the contracts are expiring within the predetermined time period, the wireless node 106, 112 may identify resource units to be obtained from the other wireless network 102, 104 (610). If some of the contracts are expiring within the predetermined time period, the wireless node 106, 112 may identify which resource units may be retrieved upon expiration of the contracts (606). The resource units may be identified based on, for example, selecting the resource units with contracts which will expire within the predetermined time period.

After identifying the resource units to be retrieved, the wireless node 106, 112 may determine whether the retrieved spectral resource units will be sufficient to meet the wireless network's 102, 104 spectral resource needs (608). If the retrieved spectral resource units will be sufficient, the wireless node 106, 112 may determine the technical feasibility of the resource unit changes with the neighboring cells (220). After determining the technical feasibility of the resource unit changes (220), the wireless node 106, 112 may create a SRC 204, 204 (510), as described with reference to FIG 7.

FIG. 7 is a flowchart of the sub-function for creating spectrum resource change messages (SRCs) (510) according to an example embodiment. According to this example, the wireless node 106, 112 may determine whether its wireless network 102, 104 needs new resource units (702). The wireless node 106, 112 may determine whether its wireless network 102, 104 needs new resource units (702) based, for example, on comparing its wireless network's 102, 104 spectral resource needs to its wireless network's 102, 104 currently available spectral resources. If the wireless node 106, 112 determines that its wireless network 102, 104 does need new resource units, then the wireless node 106, 112 may create a 'request for new resource units SRC' (704), and may create a body for the SRC 202, 204 (706).

If the wireless node 106, 112 determines that its wireless network 102, 104 does not need new resource units, then the wireless node 106, 112 may determine whether its wireless network 102, 104 should renew resource unit contracts (708). The wireless node 106, 112 may determine whether its wireless network 102, 104 should renew resource unit contracts (708) based, for example, on whether it could meet its spectral resource needs based on presently available spectral resources without the contracted-for resource units. If the wireless node 106, 112 determines that its wireless network 102, 104 should renew resource unit contracts, then the wireless node 106, 112 may create a 'renewal SRC' (710), and may create the body for the SRC 202, 204 (706).

If the wireless node 106, 112 determines that its wireless network 102, 104 does not need to renew resource unit contracts, then the wireless node 106, 112 may determine whether its wireless network 102, 104 should cancel resource unit contracts (712). The wireless node 106, 112 may determine whether its wireless network 102, 104 should cancel resource unit contracts (712) based, for example, on whether its network's 102, 104 currently available spectral resources would still exceed its spectral resource needs after cancelling the contracts, and/or based on whether it would cost less to pay a cancellation fee to cancel the contracts than to fulfill the contracts. If the wireless node 106, 112 determines that its wireless network 102, 104 should cancel resource unit contracts, then the wireless node 106, 112 may create a 'cancellation SRC' (714), and may create the body for the SRC 202, 204 (706).

If the wireless node 106, 112 determines that its wireless network 102, 104 should not cancel resource unit contracts, then the wireless node 106, 112 may determine whether its wireless network 102, 104 has unused surplus resource units (716). The wireless node 106, 112 may determine whether its wireless network 102, 104 has unused surplus resource units (716) based, for example, on comparing its wireless network's currently available spectral resources to its spectral resource needs. If the wireless node 106, 112 determines that its wireless network 102, 104 has unused surplus resource units, then the wireless node 106, 112 may create an 'advertisement SRC' (718), and may create the body for the SRC 202, 204 (706). If the wireless node 106, 112 determines that its wireless network 102, 104 does not have unused surplus resource units, then the wireless node 106, 112 may not create an SRC 202, 204, according to an example embodiment.

FIG. 8 is a flowchart of the sub-function for negotiating exchange of resource units (414) according to an example embodiment. In this example, the processes 802, 804, 806, 808 may occur in parallel with the processes 510, 816, 818, 820.

The wireless node 106, 112 may collect SRCs 202, 204 from other networks 102, 104 (802). The wireless node 106, 112 may collect the SRCs 202, 204 by, for example, receiving the SRCs 202, 204 from other nodes 106, 112 and storing the SRCs 202, 204 in memory. After collecting the SRCs 202, 204, the wireless node 106, 112 may investigate the advertisements or requests indicated by the SRCs 202, 204 (804), as described with reference to FIG 9. After investigating the advertisements or requests (804), the wireless node 106, 112 may compile a global resource unit map (806). The wireless node 106, 112 may compile the global resource unit map (806) by, for example, storing in memory an entry for each resource unit and a status for each resource unit that is either owned by the wireless node's 106, 112 wireless network 102, 104, borrowed by its wireless network 102, 104, or indicated by a received SRC 202, 204. The wireless node 106, 112 may then determine whether it has received and compiled the last advertisement or request (808). If the wireless node 106, 112 has received and compiled the last advertisement or request, then the wireless node 106, 112 may investigate the technical feasibility of resource unit changes (810). If the wireless node 106, 112 has not received and compiled the last advertisement or request, then the wireless node 106, 112 may repeat (804) and (806) until the wireless node has received and compiled all of the advertisements and requests.

The wireless node 106, 112 may create its own SRCs 202, 204 (510), as described with reference to FIG 7. The wireless node 106, 112 may compile the SRCs 202, 204 which request or advertise resources (816). The wireless node 106, 112 may compile the SRCs 202, 204 by, for example, storing the SRCs in memory. The wireless node 106, 112 may send the SRCs 202, 204 to other wireless networks 102, 104 (818). The wireless node 106, 112 may create a resource unit map 300 of its own spectral resources (820). The wireless node 106, 112 may mark its resource units as occupied when used by its wireless network 102, 104, reserved when part of its wireless network's 102, 104 margin, and considered when available for negotiation, according to an example embodiment.

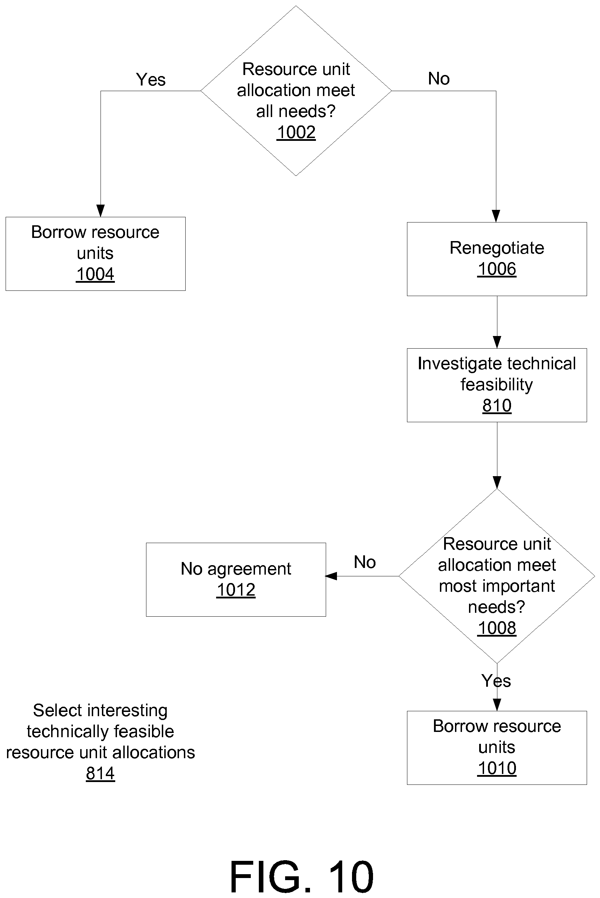

After creating the resource unit map 300 of its own spectral resources (820), the wireless node 106, 112 may investigate the technical feasibility of resource unit changes (810). The wireless node 106, 112 may investigate the technical feasibility of resource unit changes in a manner similar to the determining technical feasibility of resource unit changes 220, 222 (such as borrowing or lending resource units) with neighboring cells described with reference to FIG. 2B, according to an example embodiment. After investigating the technical feasibility of the resource unit changes (810), the wireless node 106, 112 may determine whether all permutations of interest have been checked (812). The wireless node 106, 112 may determine whether all permutations of interest have been checked (812) based, for example, on whether the wireless node 106, 112 has investigated all the possible combinations of borrowing or lending resource units. If the wireless node 106, 112 determines that it has not checked all permutations of interest, then the wireless node 106, 112 may investigate the technical feasibility of each possible resource unit allocation until all the permutations of interest have been checked. After all of the permutations of interest have been checked, the wireless node may select the interesting technically feasible resource units allocations (814), as described with reference to FIG 10.

After selecting the interesting technically feasible resource unit allocations (814), the wireless node 106, 112 may engage in the auctioning (216) for the resource units, as described with reference to FIG 2. After the auctioning (216), the wireless node 106, 112 may determine whether it is financially feasible to borrow or lend the resource units (822). The wireless node 106, 112 may determine whether it is financially feasible to borrow resource units based, for example, on comparing the cost of borrowing the resource units to the cost of not providing sufficient spectral resources to serve its wireless network's 102, 104 load. The feasibility of lending resource units may be determined based only on the technical feasibility, according to an example embodiment. If the wireless node 106, 112 determines that it is not financially feasible to borrow the resource unit(s), the wireless node 106, 112 may send an SRC decline message to the other wireless node 106, 112 (824). If the wireless node 106, 112 determines that it is financially feasible to borrow or lend the resource unit(s), then the wireless node 106, 112 may send an SRC accept message (826).

FIG. 9 is a flowchart of the sub-function for investigating advertisements or requests (804) according to an example embodiment The wireless node 106, 112 may determine if an SRC 202, 204 includes an advertisement of a resource unit from another wireless network 102, 104 (902). If the wireless node 106, 112 determines that the SRC 202, 204 includes an advertisement, then the wireless node 106, 112 may determine whether its wireless network 102, 104 has surplus resource units (904). If the wireless node's 106, 112 wireless network 102, 104 does have surplus resource units, then the wireless node 106, 112 may mark the resource unit as 'not considered' (906). If the wireless node's 106, 112 wireless network 102, 104 does not have surplus resource units, then the wireless node 106, 112 may mark the resource unit as 'considered' (908).

If the wireless node 106, 112 determines that the SRC 202, 204 does not include an advertisement for a resource unit, then the wireless node 106, 112 may determine whether the SRC 202, 204 includes a request for a new resource unit (910). If the wireless node 106, 112 determines that the SRC 202, 204 does include a request for a new resource unit, then the wireless node 106, 112 may determine whether its wireless network 102, 104 has surplus resource units (912). If the wireless node 106, 112 determines that its wireless network 102, 104 does have surplus resource units, then the wireless node 106, 112 may mark the resource unit as 'considered' (914). If the wireless node 106, 112 determines that its wireless network 102, 104 does not have surplus resource units, then the wireless node 106, 112 may mark the resource unit as 'not considered' (916).

If the wireless node 106, 112 determines that the SRC 202, 204 does not include a request for a new resource unit, then the wireless node 106, 112 may determine whether the SRC 202, 204 includes a request to renew a contract to borrow a resource unit (918). If the wireless node 106, 112 determines that the SRC 202, 204 does include a request to borrow a resource unit, then the wireless node 106, 112 may engage in auctioning 216, as described with reference to FIG. 2A. After the auctioning 216, the wireless node 106, 112 may determine whether to renew the contract (920). The wireless node 106, 112 may determine whether to renew the contract (920) based, for example, on whether the wireless node's 106, 112 wireless network has surplus resource units. If the wireless node 106, 112 determines that its wireless network 102, 104 should renew the contract, then the wireless node may mark the resource unit as 'considered' (922). If the wireless node 106, 112 determines that its wireless network 102, 104 should not renew the contract, then the wireless node 106, 112 may mark the resource unit as 'not considered' (924).

If the wireless node 106, 112 determines that the SRC 202, 204 does not include a request to renew a contract to borrow a resource unit, the wireless node may determine whether the SRC 202, 204 includes an indication that the wireless node 106, 112 which sent the SRC 202, 204 is declining a contract to lend a resource unit to the receiving wireless node 106, 112 (926). If the wireless node 106, 112 determines that the SRC 202, 204 does include an indication of declining a contract, then the wireless node 106, 112 may mark the resource unit as 'cancelled' (928), according to an example embodiment. If the SRC 202, 204 does not include an indication of declining a contract to lend a resource unit, then the SRC 202, 204 may include an unknown or undetermined message, according to an example embodiment. Based on the marking of the resource units as 'considered,' 'not considered,' or 'cancelled,' the wireless node 106, 112 may compile its global resource map 214, according to an example embodiment.

FIG. 10 is a flowchart of the sub-function for selecting interesting technically feasible resource unit allocations (814) according to an example embodiment According to this example, the wireless node 106, 112 may determine whether a resource unit allocation will meet all of its wireless network's 102, 104 needs (1002). The wireless node 106, 112 may determine whether the resource unit allocation would meet all of its wireless network's 102, 104 needs (1002) based, for example, on whether all mobile nodes in the wireless network 102, 104 would be able to transfer data at the desired rates. If the resource unit allocation would meet all of the wireless network's 102, 104 needs, then the wireless node 106, 112 may agree to borrow the resource units (1004).

If the wireless node 106, 112 determines that the resource unit allocation would not meet all of the wireless network's 102, 104 needs, then the wireless node 106, 112 may renegotiate for a different resource unit allocation (1006). After renegotiating for a different resource unit allocation (1006), the wireless node 106, 112 may investigate the technical feasibility of the renegotiated resource unit allocation (810). The wireless node 106, 112 may then determine whether the renegotiated resource unit allocation would meet its wireless network's 102, 104 most important needs (1008). The wireless node 106, 112 may determine whether the renegotiated resource unit allocation would meet its wireless network's 102, 104 most important needs (1008) based, for example, on whether certain high priority mobile nodes in the wireless network 102, 104 would be able to transfer data at desired rates, and/or whether the mobile nodes would be able to transfer data at minimum required data rates. If the resource unit allocation would meet the wireless network's 102, 104 most important needs, then the wireless node 106, 112 may agree to borrow the resource units (1010). If the resource unit allocation would not meet the wireless network's 102, 104 most important needs, then no agreement may be reached (1012), according to an example embodiment.

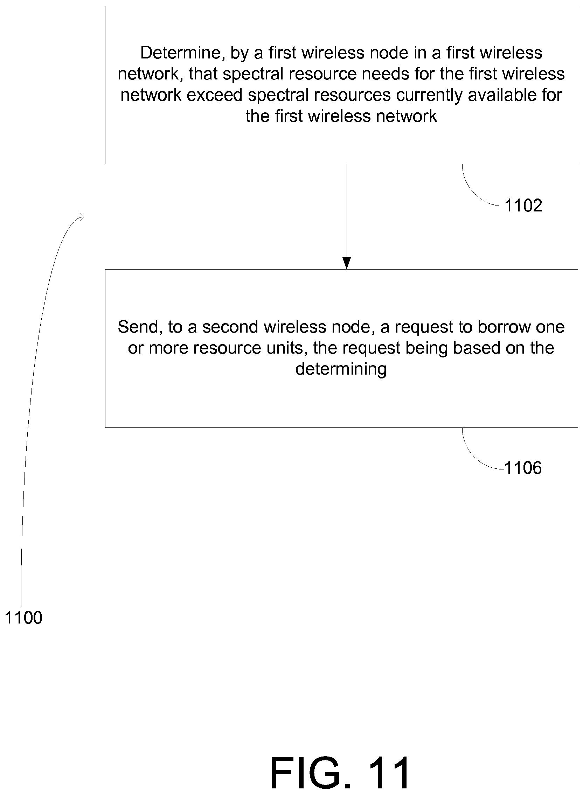

FIG. 11 is a flowchart showing a method 1100 according to an example embodiment. According to this example, the method 1100 may include determining, by a first wireless node in a first wireless network, that spectral resource needs for the first wireless network exceed spectral resources currently available for the first wireless network (1102). The method 1100 may further include sending, to the second wireless node, a request to borrow one or more of the resource units, the request being based on the determining (1104).

According to an example embodiment, the determining that spectral resource needs exceed available spectral resources (1102) may include determining whether contracts to loan spectral resources owned by the wireless network will or will not expire within a specified time.

According to an example embodiment, the method 1100 may further include receiving, from a second wireless node in a second wireless network, an advertisement indicating availability of one or more resource units. The advertisement may further indicate a total amount of spectral resources available to lend. According to another example embodiment, the advertisement may include a map (such as a resource unit map 300) identifying the one or more resource units, such as by frequency band, subcarrier index, owner, borrower, and/or time availability. The advertisement may indicate whether the identified resource units are available to lend, a notice period for cancelling a contract to borrow the identified resource units, and/or whether the second wireless network will cancel a present contract to lend the one or more resource units.

According to another example embodiment, the method 1100 may further comprise determining the spectral resource needs based on predicted network load.

According to another example embodiment, the request may identify desired spectral resource units by frequency band.

According to another example embodiment, the method 1100 may further comprise compiling a resource unit map based at least in part on the currently available spectral resources and the advertisement. According to an example embodiment, the resource unit map may be compiled based on the advertisement, the currently available spectral resources, and/or spectral resources which will be retrieved upon expiration of a contract within a specified time period. According to example embodiments, the resource unit map may identify spectral resources by frequency band and indicate whether the spectral resource units are occupied, reserved, and/or available for lending by the second wireless network, and/or whether the resource units are considered for borrowing by the first wireless network. The resource units may or may not be included in the currently available spectral resources of the first wireless network. According to an example embodiment, the advertisement may indicate that a contract to lend at least one of the one or more resource units to the first wireless network will not be renewed.

According to another example embodiment, the method 1100 may further comprise compiling a resource unit map based at least in part on the currently available spectral resources and the advertisement, and determining whether the spectral resource needs could be met based on the resource unit map. The determining may be further based on a predicted level of fragmentation of a spectrum which includes the currently available spectral resources and at least one of the advertised resource units, on a level of interference by at least some of the advertised resource units with other wireless nodes in the first wireless network, and/or on a compatibility of subcarriers included in the advertised resource units with the currently available spectral resources. The method 1100 may further include sending the second wireless node an acceptance message based on the determining that the spectral resource needs could or could not be met based on the resource unit map, and sending the wireless node an acceptance or decline message based on the determining or a request for alternative spectral resources. The method 1100 may further include determining that most important spectral resource needs could be met based on the resource unit map, and sending a request to borrow at least some of the advertised spectral resource units based on the determining that most important resource needs could be met based on the resource map.

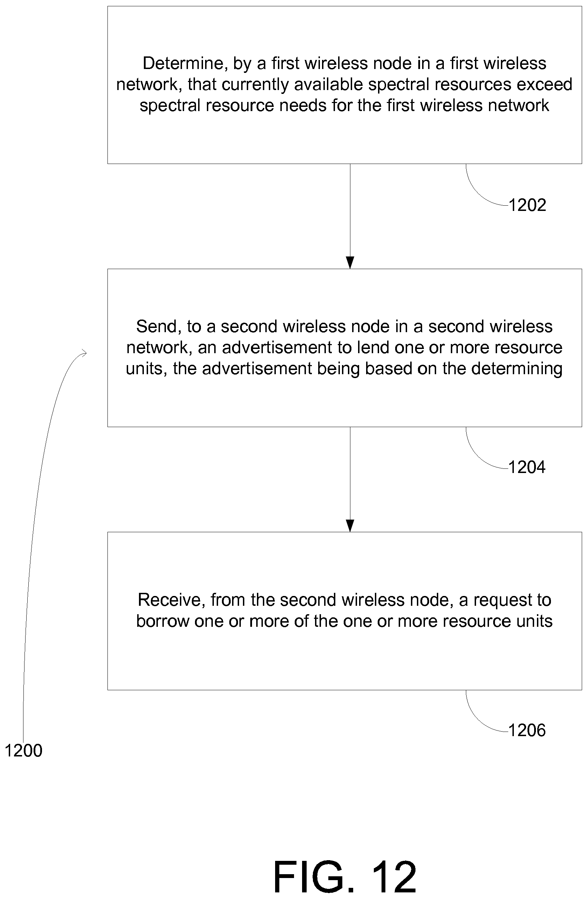

FIG. 12 is a flowchart showing another method 1200 according to another example embodiment. According to this example, the method 1200 may include determining, by a first wireless node in a first wireless network, that currently available spectral resources exceed spectral resource needs for the first wireless network (1202). The method 1200 may further include sending, to a second wireless node in a second wireless network, an advertisement to lend one or more resource units, the advertisement being based on the determining (1204). The method 1200 may further include receiving, from the second wireless node, a request to borrow one or more of the one or more resource units (1206).

According to an example embodiment, the advertisement may include a map (such as a resource unit map 300) identifying the one or more resource units and indicating whether the identified one or more resource units are available to lend. The method 1200 may further include determining which of the one or more resource units are available to lend based at least in part by minimizing fragmentation of the available spectral resources, based on determining whether an interference threshold will be satisfied after lending one or more of the one or more resource units, and/or based on determining whether a minimum guard band will still be present after lending one or more of the one or more resource units.

According to another example embodiment, the advertisement may include an offer to renew a contract to lend one or more of the one or more resource units.

According to another example embodiment, the advertisement may include a map identifying the one or more resource units and indicating whether the identified one or more resource units are subject to contracts with third-party wireless nodes which will be cancelled. According to this example, the method 1200 may further comprise determining which of the one or more resource units are subject to contracts with third-party wireless nodes which will be cancelled based at least in part by determining a set of earliest expiring contracts.

According to another example embodiment, the method 1200 may further comprise receiving, from the second wireless node, a request to borrow one or more resource units, and compiling a resource unit map at least in part on the request including a request to borrow a resource unit which is included in the available spectral resources, or at least in part on the request including a request to renew a contract to borrow a resource unit from the first wireless node.

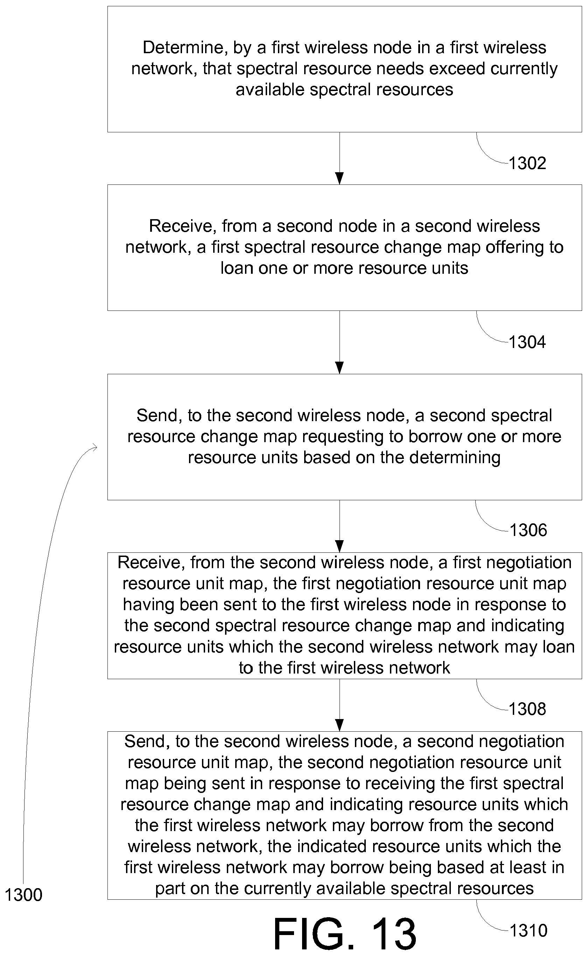

FIG 13 is a flowchart showing another method 1300 according to another example embodiment. According to this example, the method 1300 may include determining, by a first wireless node in a first wireless network, that spectral resource needs exceed currently available spectral resources (1302). The method 1300 may further include receiving, from a second wireless node in a second wireless network, a first spectral resource change map offering to loan one or more resource units (1304). The method 1300 may further include sending, to the second wireless node, a second spectral resource change map requesting to borrow one or more resource units based on the determining (1306). The method 1300 may further include receiving, from the second wireless node, a first negotiation resource unit map, the first negotiation resource unit map having been sent to the first wireless node in response to the second spectral resource change map and indicating resource units which the second wireless network may loan to the first wireless network (1308). The method 1300 may further include sending, to the second wireless node, a second negotiation resource unit map, the second negotiation resource unit map being sent in response to receiving the first spectral resource change map and indicating resource units which the first wireless network may borrow from the second wireless network, the indicated resource units which the first wireless network may borrow being based at least in part on the currently available spectral resources (1310).

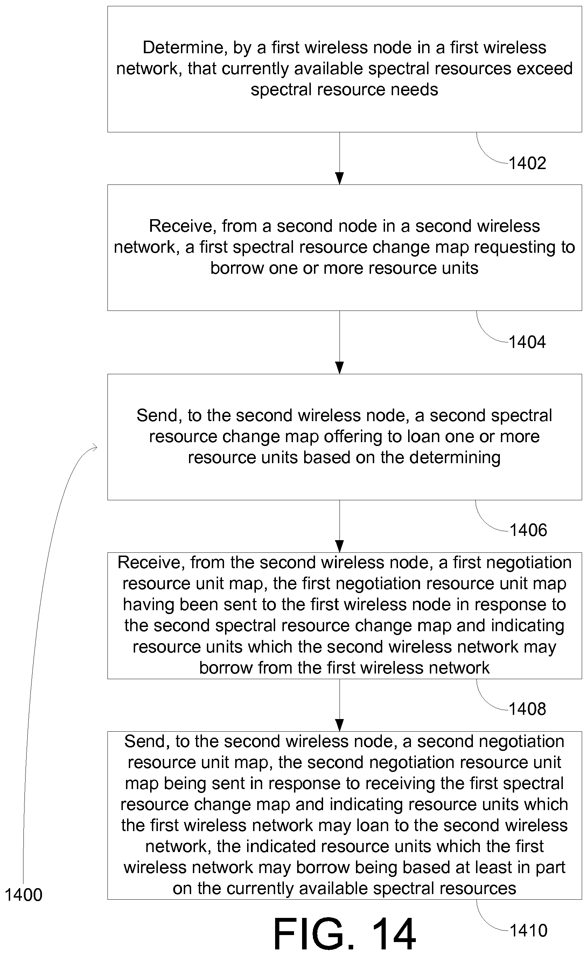

FIG. 14 is a flowchart showing another method 1400 according to another example embodiment. According to this example, the method 1400 may include determining, by a first wireless node in a first wireless network, that currently available spectral resources exceed spectral resource needs (1402). The method 1400 may further include receiving, from a second wireless node in a second wireless network, a first spectral resource change map requesting to borrow one or more resource units (1404). The method 1400 may further include sending, to the second wireless node, a second spectral resource change map offering to loan one or more resource units based on the determining (1406). The method 1400 may further include receiving, from the second wireless node, a first negotiation resource unit map, the first negotiation resource unit map having been sent to the first wireless node in response to the second spectral resource change map and indicating resource units which the second wireless network may borrow from the first wireless network (1408). The method 1400 may further include sending, to the second wireless node, a second negotiation resource unit map, the second negotiation resource unit map being sent in response to receiving the first spectral resource change map and indicating resource units which the first wireless network may loan to the second wireless network, the indicated resource units which the first wireless network may borrow being based at least in part on the currently available spectral resources (1410).

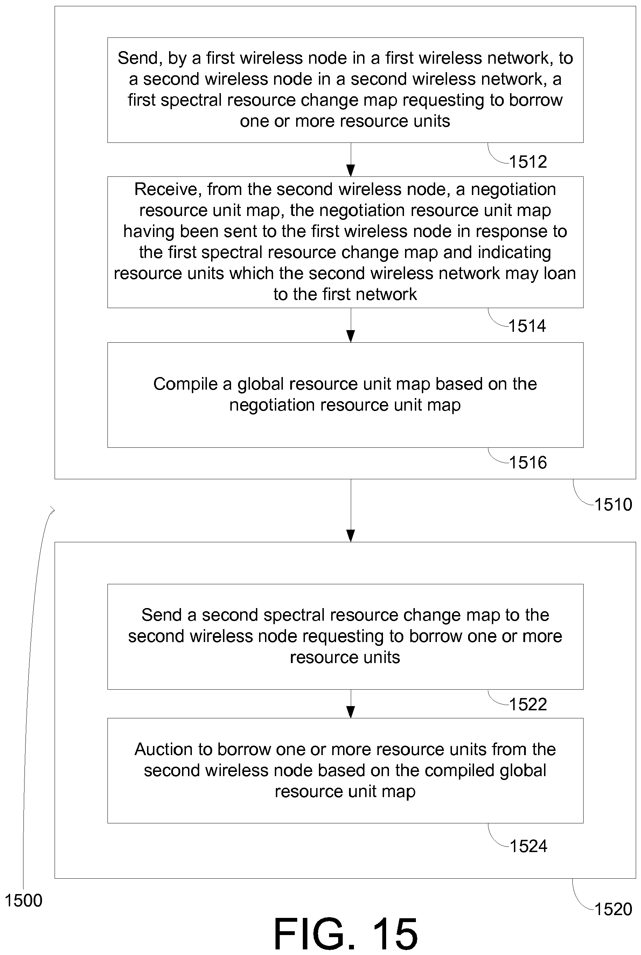

FIG. 15 is a flowchart showing a method 1500 according to another example embodiment. According to this example, the method may include a first process (1510) and a second process (1520). The first process (1510) may include some or all of the messages and processes of the long term scheme described with reference to FIG 2B. The second process (1520) may include some or all of the messages and processes of the short term scheme described with reference to FIG. 2C.

The first process (1510) may, for example, include sending, by a first wireless node in a first wireless network, to a second wireless node in a second wireless network, a first spectral resource change map requesting to borrow one or more resource units (1512). The first process (1510) may further include receiving, from the second wireless node, a negotiation resource unit map, the negotiation resource unit map having been sent to the first wireless node in response to the first spectral resource change map and indicating resource units which the second wireless network may loan to the first network (1514). The first process (1510) may further include compiling a global resource unit map based on the negotiation resource unit map (1516).

The second process (1520) may, for example, include sending a second spectral resource change map to the second wireless node requesting to borrow one or more resource units (1522). The second process (1520) may further include auctioning to borrow one or more resource units from the second wireless node based on the compiled global resource unit map (1524).

According to an example embodiment, the second process (1520) may be performed a plurality of times for each performance of the first process (1510).

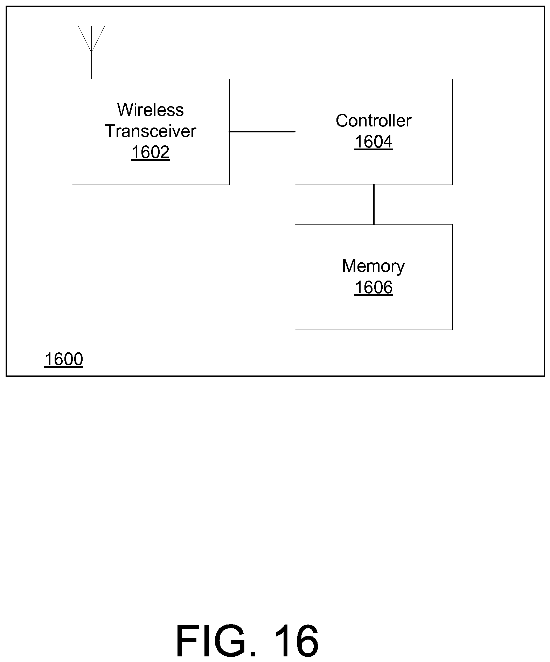

FIG. 16 is a block diagram of a wireless node 1600 according to an example embodiment. The wireless node (e.g. wireless node 106, 108) may include, for example, a wireless transceiver 1602 to transmit and receive signals, a controller 1604 to control operation of the station and execute instructions or software, and a memory 1606 to store data and/or instructions.

Controller 1604 may be programmable and capable of executing software or other instructions stored in memory or on other computer media to perform the various tasks and functions described above, such as one or more the tasks or methods described above.

In addition, a storage medium may be provided that includes stored instructions, when executed by a controller or processor that may result in the controller 1604, or other controller or processor, performing one or more of the functions or tasks described above.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet

The invention and its embodiments are not limited to the examples described in this specification but may vary within the scope of the appended claims.

## Claims

1. A method to be performed by a first wireless node (106) in a first wireless network (102) comprising:
- determining (408, 608, 702, 1102, 1302) that spectral resource needs for the first wireless network exceed spectral resources currently available for the first wireless network;
- receiving, from a second wireless node (112) in a second wireless network (104), an advertisement indicating availability of spectral resources in the form of one or more resource units;
- determining technical feasibility (220, 222, 810) of borrowing the one or more resource units from the second wireless network to determine whether the first wireless network could meet the spectral resource needs of the first wireless network after borrowing the one or more resource units from the second wireless network; and
- sending (1106), to the second wireless node (112) in the second wireless network (104), a request to borrow one or more of the one or more resource units, the request being based on said determining steps.

2. The method of claim 1 wherein the advertisement comprises
- indicating a total amount of spectral resources available to lend.

3. The method of claim 1 wherein the advertisement comprises a map (300) identifying at least one of:
- one or more resource units (302, 304) and indicating whether the identified resource units are available to lend;
- one or more resource units by frequency band (312) and indicating whether the identified resource units are available to lend;
- one or more resource units by subcarrier index (314) and indicating whether the identified resource units are available to lend;
- one or more resource units by owner (316) and indicating whether the identified resource units are available to lend;
- one or more resource units by borrower (318) and indicating whether the identified resource units are available to lend;
- one or more resource units by time availability (320) and indicating whether the identified resource units are available to lend;
- one or more resource units and indicating whether the identified resource units are available to lend, and further indicating a notice period (322) for cancelling a contract to borrow the identified resource units; and
- one or more resource units and indicating whether the second wireless network will cancel a present contract to lend the one or more resource units.

4. The method of claim 1 further comprising determining (402) the spectral resource needs based on predicted network load, and further optionally on adding (404) a margin to the predicted network load.

5. The method of claim 1 wherein the sending comprises sending to the second wireless node (112) in the second wireless network (104) a request to borrow one or more of the resource units based on said determining steps, the request identifying desired spectral resource units (302, 304) by frequency band.

6. The method of claim 1 further comprising: compiling a resource unit map (300) based at least in part on at least one of:
- the currently available spectral resources and the advertisement;
- the advertisement, the currently available spectral resources, and spectral resources which will be retrieved upon expiration of a contract within a specified time period;
- the currently available spectral resources and the advertisement, the resource unit map identifying spectral resource units by frequency band and indicating whether the spectral resource units are occupied by the first wireless network;
- the currently available spectral resources and the advertisement, the resource unit map identifying spectral resource units by frequency band and indicating whether the spectral resource units are reserved by the first wireless network;
- the currently available spectral resources and the advertisement, the resource unit map identifying spectral resource units by frequency band and indicating whether the spectral resource units are available for lending by the second wireless network;
- the currently available spectral resources and the advertisement, the resource unit map identifying spectral resource units by frequency band and indicating whether the spectral resource units are available for lending by the second wireless network and whether the spectral resource units are considered for borrowing by the first wireless network;
- the currently available spectral resources and the advertisement, the advertisement indicating that at least one of the resource units, which is not included in the currently available spectral resources of the first wireless network, is available to lend; and
- the currently available spectral resources and the advertisement, the advertisement indicating that a contract to lend at least one of the resource units to the first wireless network will not be renewed.

7. The method of claim 1 further comprising:
compiling a resource unit map (300) based at least in part on the currently available spectral resources and the advertisement determining at least one of:
- whether the spectral resource needs could be met based on the resource unit map;
- whether the spectral resource needs could be met based on the resource unit map based on a predicted level of fragmentation of a spectrum which includes the currently available spectral resources and at least one of the advertised resource units;
- whether the spectral resource needs could be met based on the resource unit map based on a level of interference by at least some of the advertised resource units with other wireless nodes in the first wireless network;
- whether the spectral resource needs could be met based on the resource unit map based on a compatibility of subcarriers included in the advertised resource units with the currently available spectral resources;
- that the spectral resource needs could be met based on the resource unit map; and sending the second wireless node an acceptance message based on the determining that the spectral resource needs could be met based on the resource unit map;
- that the spectral resource needs could not be met based on the resource unit map; and sending the another wireless node a decline message based on the determining that the spectral resource needs could not be met based on the resource unit map;
- that the spectral resource needs could not be met based on the resource unit map; and sending a request for alternative spectral resources to the second wireless node;
- that the spectral resource needs could not be met based on the resource unit map;
determining that most important spectral resource needs could be met based on the resource unit map; and sending a request to borrow at least some of the advertised resource units based on the determining that the most important spectral resource needs could be met based on the resource unit map; and
- that the spectral resource needs could be met based on the resource unit map; and
sending a request to borrow at least some of the advertised resource units based on the determining that the spectral resource needs could be met based on the resource unit map.

8. A method to be performed by a first wireless node (106) in a first wireless network (102) comprising:
- determining (1202, 1402) that currently available spectral resources exceed spectral resource needs for the first wireless network;
- determining technical feasibility of lending spectral resources in the form of one or more resource units to a second wireless network (104) to determine whether the first wireless network could meet the spectral resource needs of the first wireless network after lending the one or more resource units to the second wireless network;
- sending (1204), to a second wireless node (112) in the second wireless network (104), an advertisement to lend the one or more resource units, the advertisement being based on said determining steps and
- receiving (1206), from the second wireless node (112) in the second wireless network (104), a request to borrow one or more of the one or more resource units.

9. The method of claim 8 wherein: the sending the advertisement to lend one or more resource units includes sending the advertisement, the advertisement including a map (300) identifying the one or more resource units and indicating whether the identified one or more resource units are available to lend;
and the method comprises at least one of:
- determining which of the one or more resource units are available to lend based at least in part by minimizing fragmentation of the available spectral resources;
- determining which of the one or more resource units are available to lend based at least in part by determining whether an interference threshold will be satisfied after lending one or more of the one or more resource units; and
- determining which of the one or more resource units are available to lend based at least in part by determining whether a minimum guardband will still be present after lending one or more of the resource units.

10. The method of claim 8 wherein:
the sending the advertisement to lend the one or more resource units includes sending the advertisement, the advertisement including a map (300) identifying the one or more resource units and indicating whether the identified one or more resource units are subject to contracts with third-party wireless nodes which will be cancelled; and
the method further comprises determining which of the one or more resource units are subject to contracts with third-party wireless nodes which will be cancelled based at least in part by determining a set of earliest expiring contracts.

11. The method of claim 8 further comprising:
compiling a resource unit map based at least in part on the request including a request to borrow a resource unit which is included in the available spectral resources.

12. The method of claim 8 further comprising:
compiling a resource unit map (300) based at least in part on the request including a request to renew a contract to borrow a resource unit from the first wireless node.

13. The method of claim 8 wherein the determining of the technical feasibility comprises exchanging signals with other wireless nodes of the first wireless network (102).

14. The method of claim 8 wherein the determining of the technical feasibility comprises optimizing fragmentation of the available spectral resources.

15. A first wireless node (1600, 106) in a first wireless network (102) comprising:
a controller (1604);
the first wireless node being configured to:
determine that spectral resource needs for the first wireless network exceed spectral resources currently available for the first wireless network; receive, from a second wireless node (116) in a second wireless network (104), an advertisement indicating availability of spectral resources in the term of one or more resource units;
determine technical feasibility (220, 222, 810) of borrowing the one or more resource units from the second wireless network to determine whether the first wireless network could meet the spectral resource needs of the first wireless network after borrowing the one or more resource units from the second wireless network; and
send, to the second wireless node in the second wireless network, a request to borrow one or more of the one or more resource units, the request being based on the results of the determination.

16. The first wireless node of claim 15 being further configured to perform method according to any of claims 2 to 7.

17. A first wireless node (1600, 106) in a first wireless network (102) comprising:
a controller (1604);
the first wireless node being configured to:
determine that currently available spectral resources exceed spectral resource needs for the first wireless network; determine technical feasibility of lending spectral resources in the form of one or more resource units to a second wireless network (104) to determine whether the first wireless network could meet the spectral resource needs of the first wireless network after lending the one or more resource units to the second wireless network;
send, to a second wireless node (112) in the second wireless network, an advertisement to lend the one or more resource units, the advertisement being based on the results of the determination. and
receive from the second wireless node in the second wireless network a request to borrow one or more of the one or more resource units.

18. The first wireless node of claim 17 being further configured to perform method according to any of claims 9 to 14.

19. A computer-readable medium encoded with instructions that, when executed by a computer, cause performation of a method according to any of claims 1-7 or 8-14.

## Patentansprüche

1. Verfahren, das von einem ersten drahtlosen Knoten (106) in einem ersten drahtlosen Netzwerk (102) durchzuführen ist und Folgendes umfasst:
- Bestimmen (408, 608, 702, 1102, 1302), dass ein Spektralressourcenbedarf für das erste drahtlose Netzwerk derzeit für das erste drahtlose Netzwerk verfügbare Spektralressourcen überschreitet;
- Empfangen von einem zweiten drahtlosen Knoten (112) in einem zweiten drahtlosen Netzwerk (104) einer Ankündigung, die eine Verfügbarkeit von Spektralressourcen in Form von einer oder mehreren Ressourceneinheiten anzeigt;
- Bestimmen einer technischen Durchführbarkeit (220, 222, 810) des Entleihens der einen oder mehreren Ressourceneinheiten vom zweiten drahtlosen Netzwerk, um zu bestimmen, ob das erste drahtlose Netzwerk den Spektralressourcenbedarf des ersten drahtlosen Netzwerks decken könnte, nachdem es die eine oder die mehreren Ressourceneinheiten vom zweiten drahtlosen Netzwerk entliehen hat; und
- Senden (1106) an den zweiten drahtlosen Knoten (112) im zweiten drahtlosen Netzwerk (104) einer Anforderung zum Entleihen einer oder mehrerer der einen oder mehreren Ressourceneinheiten, wobei die Anforderung auf den Bestimmungsschritten basiert.

2. Verfahren nach Anspruch 1, wobei die Ankündigung Folgendes umfasst
- Anzeigen einer Gesamtmenge an Spektralressourcen, die zum Verleihen verfügbar sind.

3. Verfahren nach Anspruch 1, wobei die Ankündigung eine Karte (300) umfasst, die mindestens eines von Folgendem identifiziert:
- eine oder mehrere Ressourceneinheiten (302, 304) und anzeigt, ob die identifizierten Ressourceneinheiten zum Verleihen verfügbar sind;
- eine oder mehrere Ressourceneinheiten nach Frequenzband (312) und anzeigt, ob die identifizierten Ressourceneinheiten zum Verleihen verfügbar sind;
- eine oder mehrere Ressourceneinheiten nach Unterträgerindex (314) und anzeigt, ob die identifizierten Ressourceneinheiten zum Verleihen verfügbar sind;
- eine oder mehrere Ressourceneinheiten nach Eigentümer (316) und anzeigt, ob die identifizierten Ressourceneinheiten zum Verleihen verfügbar sind;
- eine oder mehrere Ressourceneinheiten nach Entleiher (318) und anzeigt, ob die identifizierten Ressourceneinheiten zum Verleihen verfügbar sind;
- eine oder mehrere Ressourceneinheiten nach Zeitverfügbarkeit (320) und anzeigt, ob die identifizierten Ressourceneinheiten zum Verleihen verfügbar sind;
- eine oder mehrere Ressourceneinheiten und anzeigt, ob die identifizierten Ressourceneinheiten zum Verleihen verfügbar sind, und ferner eine Kündigungsperiode (322) zum Aufkündigen eines Vertrags zum Entleihen der identifizierten Ressourceneinheiten anzeigt; und
- eine oder mehrere Ressourceneinheiten und anzeigt, ob das zweite drahtlose Netzwerk einen vorhandenen Vertrag zum Verleihen der einen oder der mehreren Ressourceneinheiten aufkündigt.

4. Verfahren nach Anspruch 1, das ferner das Bestimmen (402) des Spektralressourcenbedarfs auf Basis einer vorhergesagten Netzwerklast und ferner gegebenenfalls eines Hinzufügens (404) einer Marge zur vorhergesagten Netzwerklast umfasst.

5. Verfahren nach Anspruch 1, wobei das Senden das Senden einer Anforderung zum Entleihen einer oder mehrerer der Ressourceneinheiten auf Basis der Bestimmungsschritte an den zweiten drahtlosen Knoten (112) im zweiten drahtlosen Netzwerk (104) umfasst, wobei die Anforderung gewünschte Spektralressourceneinheiten (302, 304) nach Frequenzband identifiziert.

6. Verfahren nach Anspruch 1, das ferner Folgendes umfasst: Erstellen einer Ressourceneinheitenkarte (300) mindestens teilweise auf Basis von mindestens einem von Folgendem:
- den derzeit verfügbaren Spektralressourcen und der Ankündigung;
- der Ankündigung, den derzeit verfügbaren Spektralressourcen und von Spektralressourcen, die nach Ablauf eines Vertrags innerhalb einer spezifizierten Zeitperiode abgerufen werden;
- den derzeit verfügbaren Spektralressourcen und der Ankündigung, der Ressourceneinheitenkarte, die die Spektralressourceneinheiten nach Frequenzband identifiziert und angezeigt, ob die Spektralressourceneinheiten vom ersten drahtlosen Netzwerk belegt sind;
- den derzeit verfügbaren Spektralressourcen und der Ankündigung, der Ressourceneinheitenkarte, die die Spektralressourceneinheiten nach Frequenzband identifiziert und anzeigt, ob die Spektralressourceneinheiten vom ersten drahtlosen Netzwerk reserviert sind;
- den derzeit verfügbaren Spektralressourcen und der Ankündigung, der Ressourceneinheitenkarte, die die Spektralressourceneinheiten nach Frequenzband identifiziert und anzeigt, ob die Spektralressourceneinheiten zum Verleihen durch das zweite drahtlose Netzwerk verfügbar sind;
- den derzeit verfügbaren Spektralressourcen und der Ankündigung, der Ressourceneinheitenkarte, die die Spektralressourceneinheiten nach Frequenzband identifiziert und anzeigt, ob die Spektralressourceneinheiten zum Verleihen durch das zweite drahtlose Netzwerk verfügbar sind und ob die Spektralressourceneinheiten zum Entleihen durch das erste drahtlose Netzwerk in Betracht gezogen werden;
- den derzeit verfügbaren Spektralressourcen und der Ankündigung, wobei die Ankündigung anzeigt, dass mindestens eine der Ressourceneinheiten, die nicht in den derzeit verfügbaren Spektralressourcen des ersten drahtlosen Netzwerks beinhaltet ist, zum Verleihen verfügbar ist; und
- den derzeit verfügbaren Spektralressourcen und der Ankündigung, wobei die Ankündigung anzeigt, dass ein Vertrag zum Verleihen mindestens einer der Ressourceneinheiten an das erste drahtlose Netzwerk nicht erneuert wird.

7. Verfahren nach Anspruch 1, das ferner Folgendes umfasst:
Erstellen einer Ressourceneinheitenkarte (300) mindestens teilweise auf Basis der derzeit verfügbaren Spektralressourcen und Bestimmen durch die Ankündigung von mindestens einem von Folgendem:
- ob der Spektralressourcenbedarf auf Basis der Ressourceneinheitenkarte gedeckt werden könnte;
- ob der Spektralressourcenbedarf auf Basis eines vorhergesagten Maßes der Fragmentierung eines Spektrums, das die derzeit verfügbaren Spektralressourcen und mindestens eine der angekündigten Ressourceneinheiten beinhaltet, auf Basis der Ressourceneinheitenkarte gedeckt werden könnte;
- ob der Spektralressourcenbedarf auf Basis eines Maßes der Interferenz durch mindestens einige der angekündigten Ressourceneinheiten mit anderen drahtlosen Knoten im ersten drahtlosen Netzwerk auf Basis der Ressourceneinheitenkarte gedeckt werden könnte;
- ob der Spektralressourcenbedarf auf Basis einer Kompatibilität von Unterträgern, die in den angekündigten Ressourceneinheiten beinhaltet sind, mit den derzeit verfügbaren Spektralressourcen auf Basis der Ressourceneinheitenkarte gedeckt werden könnte;
- dass der Spektralressourcenbedarf auf Basis der Ressourceneinheitenkarte gedeckt werden könnte; und Senden auf Basis des Bestimmens, dass der Spektralressourcenbedarf auf Basis der Ressourceneinheitenkarte gedeckt werden könnte, einer Akzeptanznachricht an den zweiten drahtlosen Knoten;
- dass der Spektralressourcenbedarf auf Basis der Ressourceneinheitenkarte nicht gedeckt werden könnte;
und Senden auf Basis des Bestimmens, dass der Spektralressourcenbedarf auf Basis der Ressourceneinheitenkarte nicht gedeckt werden könnte,
einer Ablehnungsnachricht an den anderen drahtlosen Knoten;
- dass der Spektralressourcenbedarf auf Basis der Ressourceneinheitenkarte nicht gedeckt werden könnte;
und Senden einer Anforderung von alternativen Spektralressourcen an den zweiten drahtlosen Knoten;
- dass der Spektralressourcenbedarf auf Basis der Ressourceneinheitenkarte nicht gedeckt werden könnte;
Bestimmen, dass ein wichtigster Spektralressourcenbedarf auf Basis der Ressourceneinheitenkarte gedeckt werden könnte; und
Senden einer Anforderung zum Entleihen mindestens einiger der angekündigten Ressourceneinheiten auf Basis des Bestimmens, dass der wichtigste Spektralressourcenbedarf auf Basis der Ressourceneinheitenkarte gedeckt werden könnte; und
- dass der Spektralressourcenbedarf auf Basis der Ressourceneinheitenkarte gedeckt werden könnte; und Senden einer Anforderung zum Entleihen mindestens einiger der angekündigten Ressourceneinheiten auf Basis des Bestimmens, dass der Spektralressourcenbedarf auf Basis der Ressourceneinheitenkarte gedeckt werden könnte.

8. Verfahren, das von einem ersten drahtlosen Knoten (106) in einem ersten drahtlosen Netzwerk (102) durchzuführen ist und Folgendes umfasst:
- Bestimmen (1202, 1402), dass derzeit verfügbare Spektralressourcen einen Spektralressourcenbedarf für das erste drahtlose Netzwerk überschreiten;
- Bestimmen einer technischen Durchführbarkeit des Verleihens von Spektralressourcen in Form einer oder mehrerer Ressourceneinheiten an ein zweites drahtloses Netzwerk (104), um zu bestimmen, ob das erste drahtlose Netzwerk den Spektralressourcenbedarf des ersten drahtlosen Netzwerks decken könnte, nachdem es die eine oder die mehreren Ressourceneinheiten an das zweite drahtlose Netzwerk verliehen hat;
- Senden (1204) an einen zweiten drahtlosen Knoten (112) im zweiten drahtlosen Netzwerk (104) einer Ankündigung, die eine oder die mehreren Ressourceneinheiten zu verleihen, wobei die Ankündigung auf den Bestimmungsschritten basiert, und
- Empfangen (1206) vom zweiten drahtlosen Knoten (112) im zweiten drahtlosen Netzwerk (104) einer Anforderung zum Entleihen einer oder mehrerer der einen oder mehreren Ressourceneinheiten.

9. Verfahren nach Anspruch 8, wobei: das Senden der Ankündigung zum Verleihen einer oder mehrerer Ressourceneinheiten das Senden der Ankündigung beinhaltet, wobei die Ankündigung eine Karte (300) beinhaltet, die die eine oder die mehreren Ressourceneinheiten identifiziert und anzeigt, ob die identifizierten eine oder mehreren Ressourceneinheiten zum Verleihen verfügbar sind;
und das Verfahren mindestens eines von Folgendem umfasst:
- Bestimmen mindestens teilweise auf Basis durch Minimieren einer Fragmentierung der verfügbaren Spektralressourcen, welche der einen oder mehreren Ressourceneinheiten zum Verleihen verfügbar sind;
- Bestimmen mindestens teilweise auf Basis durch Bestimmen, ob ein Interferenzschwellwert erfüllt ist, nachdem eine oder mehrere der einen oder mehreren Ressourceneinheiten verliehen wurden, welche der einen oder mehreren Ressourceneinheiten zum Verleihen verfügbar sind; und
- Bestimmen mindestens teilweise auf Basis durch Bestimmen, ob ein Mindestschutzband noch vorhanden sein wird, nachdem eine oder mehrere der Ressourceneinheiten verliehen wurden, welche der einen oder mehreren Ressourceneinheiten zum Verleihen verfügbar sind.

10. Verfahren nach Anspruch 8, wobei:
das Senden der Ankündigung zum Verleihen der einen oder der mehreren Ressourceneinheiten das Senden der Ankündigung beinhaltet, wobei die Ankündigung eine Karte (300) beinhaltet, die die eine oder die mehreren Ressourceneinheiten identifiziert und anzeigt, ob die identifizierte(n) eine oder mehreren Ressourceneinheiten Verträgen mit drahtlosen Knoten von Drittanbietern unterliegen, die aufgekündigt werden; und
wobei das Verfahren ferner das Bestimmen mindestens teilweise auf Basis durch Bestimmen eines Satzes von am frühsten ablaufenden Verträgen, welche der einen oder der mehreren Ressourceneinheiten Verträgen mit drahtlosen Knoten von Drittanbietern unterliegen, die aufgekündigt werden, umfasst.

11. Verfahren nach Anspruch 8, das ferner Folgendes umfasst:
Erstellen einer Ressourceneinheitenkarte mindestens teilweise auf Basis der Anforderung, die eine Anforderung zum Entleihen einer Ressourceneinheit beinhaltet, die in den verfügbaren Spektralressourcen beinhaltet ist.

12. Verfahren nach Anspruch 8, das ferner Folgendes umfasst:
Erstellen einer Ressourceneinheitenkarte (300) mindestens teilweise auf Basis der Anforderung, die eine Anforderung zum Erneuern eines Vertrags zum Entleihen einer Ressourceneinheit vom ersten drahtlosen Knoten beinhaltet.

13. Verfahren nach Anspruch 8, wobei das Bestimmen der technischen Durchführbarkeit das Austauschen von Signalen mit anderen drahtlosen Knoten des ersten drahtlosen Netzwerks (102) umfasst.

14. Verfahren nach Anspruch 8, wobei das Bestimmen der technischen Durchführbarkeit das Optimieren einer Fragmentierung der verfügbaren Spektralressourcen umfasst.

15. Erster drahtloser Knoten (1600, 106) in einem ersten drahtlosen Netzwerk (102), der Folgendes umfasst:
eine Steuerung (1604);
wobei der erste drahtlose Knoten zu Folgendem ausgelegt ist:
Bestimmen, dass ein Spektralressourcenbedarf für das erste drahtlose Netzwerk derzeit für das erste drahtlose Netzwerk verfügbare Spektralressourcen überschreitet;
Empfangen von einem zweiten drahtlosen Knoten (116) in einem zweiten drahtlosen Netzwerk (104) einer Ankündigung, die eine Verfügbarkeit von Spektralressourcen im Ausdruck von einer oder mehreren Ressourceneinheiten anzeigt;
Bestimmen einer technischen Durchführbarkeit (220, 222, 810) des Entleihens der einen oder mehreren Ressourceneinheiten vom zweiten drahtlosen Netzwerk, um zu bestimmen, ob das erste drahtlose Netzwerk den Spektralressourcenbedarf des ersten drahtlosen Netzwerks decken könnte, nachdem es die eine oder die mehreren Ressourceneinheiten vom zweiten drahtlosen Netzwerk entliehen hat; und
Senden an den zweiten drahtlosen Knoten im zweiten drahtlosen Netzwerk einer Anforderung zum Entleihen einer oder mehrerer der einen oder mehreren Ressourceneinheiten, wobei die Anforderung auf den Ergebnissen der Bestimmung basiert.

16. Erster drahtloser Knoten nach Anspruch 15, der ferner dazu ausgelegt ist, ein Verfahren nach einem der Ansprüche 2 bis 7 durchzuführen.

17. Erster drahtloser Knoten (1600, 106) in einem ersten drahtlosen Netzwerk (102), der Folgendes umfasst:
eine Steuerung (1604);
wobei der erste drahtlose Knoten zu Folgendem ausgelegt ist:
Bestimmen, dass derzeit verfügbare Spektralressourcen einen Spektralressourcenbedarf für das erste drahtlose Netzwerk überschreiten;
Bestimmen einer technischen Durchführbarkeit des Verleihens von Spektralressourcen in Form einer oder mehrerer Ressourceneinheiten an ein zweites drahtloses Netzwerk (104), um zu bestimmen, ob das erste drahtlose Netzwerk den Spektralressourcenbedarf des ersten drahtlosen Netzwerks decken könnte, nachdem es die eine oder die mehreren Ressourceneinheiten an das zweite drahtlose Netzwerk verliehen hat;
Senden an einen zweiten drahtlosen Knoten (112) im zweiten drahtlosen Netzwerk einer Ankündigung, die eine oder die mehreren Ressourceneinheiten zu verleihen,
wobei die Ankündigung auf den Ergebnissen der Bestimmung basiert, und
Empfangen vom zweiten drahtlosen Knoten im zweiten drahtlosen Netzwerk einer Anforderung zum Entleihen einer oder mehrerer der einen oder mehreren Ressourceneinheiten.

18. Erster drahtloser Knoten nach Anspruch 17, der ferner dazu ausgelegt ist, ein Verfahren nach einem der Ansprüche 9 bis 14 durchzuführen.

19. Computerlesbares Medium, das mit Anweisungen codiert ist, die, wenn sie von einem Computer ausgeführt werden, eine Durchführung eines Verfahrens nach einem der Ansprüche 1-7 oder 8-14 bewirken.

## Revendications

1. Procédé à exécuter par un premier noeud sans fil (106) dans un premier réseau sans fil (102) comprenant les étapes suivantes :
déterminer (408, 608, 702, 1102, 1302) que les besoins en ressources spectrales pour le premier réseau sans fil dépassent les ressources spectrales actuellement disponibles pour le premier réseau sans fil ;
recevoir, depuis un second noeud sans fil (112) dans un second réseau sans fil (104), une annonce indiquant la disponibilité de ressources spectrales sous la forme d'une ou plusieurs unités de ressources ;
déterminer la faisabilité technique (220, 222, 810) d'emprunter la ou les unités de ressources du second réseau sans fil pour déterminer si le premier réseau sans fil pourrait satisfaire les besoins en ressources spectrales du premier réseau sans fil après avoir emprunté les une ou plusieurs unités de ressources du second réseau sans fil ; et
envoyer (1106), au second noeud sans fil (112), dans le second réseau sans fil (104), une demande d'emprunt d'une ou plusieurs des une ou plusieurs unités de ressources, la demande étant basée sur lesdites étapes de détermination.

2. Procédé selon la revendication 1, dans lequel l'annonce comprend d'indiquer une quantité totale de ressources spectrales disponibles pour le prêt.

3. Procédé selon la revendication 1, dans lequel l'annonce comprend une carte (300) identifiant au moins une unité parmi les suivantes :
une ou plusieurs unités de ressources (302, 304) et indiquant si les unités de ressources identifiées sont disponibles pour le prêt ;
une ou plusieurs unités de ressources par bande de fréquences (312) et indiquant si les unités de ressources identifiées sont disponibles pour le prêt ;
une ou plusieurs unités de ressources par index de sous-porteuse (314) et indiquant si les unités de ressources identifiées sont disponibles pour le prêt ;
une ou plusieurs unités de ressources par propriétaire (316) et indiquant si les unités de ressources identifiées sont disponibles pour le prêt ;
une ou plusieurs unités de ressources par emprunteur (318) et indiquant si les unités de ressources identifiées sont disponibles pour le prêt ;
une ou plusieurs unités de ressources par disponibilité temporelle (320) et indiquant si les unités de ressources identifiées sont disponibles pour le prêt ;
une ou plusieurs unités de ressources et indiquant si les unités de ressources identifiées sont disponibles pour le prêt, et indiquant en outre un délai de préavis (322) pour annuler un contrat d'emprunt des unités de ressources identifiées ; et
une ou plusieurs unités de ressources et indiquant si le second réseau sans fil annulera un contrat actuel de prêt des une ou plusieurs unités de ressources.

4. Procédé selon la revendication 1, comprenant en outre de déterminer (402) les besoins en ressources spectrales sur la base de la charge prévue du réseau et, en outre, facultativement, sur l'ajout (404) d'une marge à la charge prévue du réseau.

5. Procédé selon la revendication 1, dans lequel l'envoi comprend d'envoyer au second noeud sans fil (112) dans le second réseau sans fil (104) d'une demande d'emprunt d'une ou plusieurs des unités de ressources sur la base desdites étapes de détermination, la demande identifiant les unités de ressources spectrales souhaitées (302, 304) par bande de fréquences.

6. Procédé selon la revendication 1, comprenant en outre de compiler une carte d'unités de ressources (300) sur la base, au moins en partie, d'un des éléments suivants :
les ressources spectrales actuellement disponibles et l'annonce ;
l'annonce, les ressources spectrales actuellement disponibles et les ressources spectrales qui seront récupérées à l'expiration d'un contrat dans un délai spécifié ;
les ressources spectrales actuellement disponibles et l'annonce, la carte des unités de ressources identifiant les unités de ressources spectrales par bande de fréquences et indiquant si les unités de ressources spectrales sont occupées par le premier réseau sans fil ;
les ressources spectrales actuellement disponibles et l'annonce, la carte des unités de ressources identifiant les unités de ressources spectrales par bande de fréquences et indiquant si les unités de ressources spectrales sont réservées par le premier réseau sans fil ;
les ressources spectrales actuellement disponibles et l'annonce, la carte des unités de ressources identifiant les unités de ressources spectrales par bande de fréquences et indiquant si les unités de ressources spectrales sont disponibles pour le prêt par le second réseau sans fil ;
les ressources spectrales actuellement disponibles et l'annonce, la carte des unités de ressources identifiant les unités de ressources spectrales par bande de fréquences et indiquant si les unités de ressources spectrales sont disponibles pour être prêtées par le second réseau sans fil et si les unités de ressources spectrales peuvent être empruntées par le premier réseau sans fil ;
les ressources spectrales actuellement disponibles et l'annonce, l'annonce indiquant qu'au moins une des unités de ressources, qui n'est pas incluse dans les ressources spectrales actuellement disponibles du premier réseau sans fil, est disponible pour le prêt ; et
les ressources spectrales actuellement disponibles et l'annonce, l'annonce indiquant qu'un contrat pour prêter au moins une des unités de ressources au premier réseau sans fil ne sera pas renouvelé.

7. Procédé selon la revendication 1 comprenant en outre les étapes suivantes :
compiler une carte d'unités de ressources (300) sur la base, au moins en partie, des ressources spectrales actuellement disponibles et de l'annonce déterminant au moins l'un des cas suivants :
si les besoins en ressources spectrales pourraient être satisfaits sur la base de la carte des unités de ressources ;
si les besoins en ressources spectrales pourraient être satisfaits sur la base de la carte des unités de ressources basée sur un niveau prévu de fragmentation d'un spectre qui inclut les ressources spectrales actuellement disponibles et au moins l'une des unités de ressources annoncées ;
si les besoins en ressources spectrales pourraient être satisfaits sur la base de la carte des unités de ressources basée sur un niveau d'interférence par au moins certaines des unités de ressources annoncées avec d'autres noeuds sans fil dans le premier réseau sans fil ;
si les besoins en ressources spectrales pourraient être satisfaits sur la base de la carte des unités de ressources basée sur une compatibilité des sous-porteuses incluses dans les unités de ressources annoncées avec les ressources spectrales actuellement disponibles ;
que les besoins en ressources spectrales pourraient être satisfaits sur la base de la carte des unités de ressources ; et envoyer au second noeud sans fil un message d'acceptation basé sur la détermination que les besoins en ressources spectrales pourraient être satisfaits sur la base de la carte des unités de ressources ;
que les besoins en ressources spectrales ne pourraient pas être satisfaits sur la base de la carte des unités de ressources ; et envoyer à l'autre noeud sans fil un message de déclin basé sur la détermination que les besoins en ressources spectrales ne pourraient pas être satisfaits sur la base de la carte des unités de ressources ;
que les besoins en ressources spectrales ne pourraient être satisfaits sur la base de la carte des unités de ressources ; et envoyer une demande de ressources spectrales alternatives au second noeud sans fil ;
que les besoins en ressources spectrales ne pourraient pas être satisfaits sur la base de la carte des unités de ressources ; déterminer que les besoins en ressources spectrales les plus importants pourraient être satisfaits sur la base de la carte des unités de ressources ; et envoyer une demande d'emprunt d'au moins certaines des unités de ressources annoncées sur la base de la détermination que les besoins en ressources spectrales les plus importants pourraient être satisfaits sur la base de la carte des unités de ressources ; et
que les besoins en ressources spectrales pourraient être satisfaits sur la base de la carte des unités de ressources ; et envoyer une demande d'emprunt d'au moins certaines des unités de ressources annoncées sur la base de la détermination que les besoins en ressources spectrales pourraient être satisfaits sur la base de la carte des unités de ressources.

8. Procédé à exécuter par un premier noeud sans fil (106) dans un premier réseau sans fil (102) comprenant les étapes suivantes :
déterminer (1202, 1402) que les ressources spectrales actuellement disponibles dépassent les besoins en ressources spectrales pour le premier réseau sans fil ;
déterminer la faisabilité technique du prêt de ressources spectrales sous la forme d'une ou de plusieurs unités de ressources à un second réseau sans fil (104) pour déterminer si le premier réseau sans fil pourrait satisfaire les besoins en ressources spectrales du premier réseau sans fil après avoir prêté les une ou plusieurs unités de ressources au second réseau sans fil ;
envoyer (1204), à un second noeud sans fil (112) dans le second réseau sans fil (104), une annonce pour prêter les une ou plusieurs unités de ressources, l'annonce étant basée sur lesdites étapes de détermination, et
recevoir (1206), depuis le second noeud sans fil (112) dans le second réseau sans fil (104), une demande d'emprunt d'une ou plusieurs unités de ressources des une ou plusieurs unités de ressources.

9. Procédé selon la revendication 8, dans lequel :
l'envoi de l'annonce pour prêter une ou plusieurs unités de ressources comprend d'envoyer l'annonce, l'annonce comprenant une carte (300) identifiant les une ou plusieurs unités de ressources et indiquant si les une ou plusieurs unités de ressources identifiées sont disponibles pour le prêt ;
et le procédé comprend au moins l'une des étapes suivantes :
déterminer laquelle ou lesquelles des une ou plusieurs unités de ressources sont disponibles pour le prêt en se basant au moins en partie sur la minimisation de la fragmentation des ressources spectrales disponibles ;
déterminer laquelle ou lesquelles des une ou plusieurs unités de ressources sont disponibles pour le prêt en se basant au moins en partie sur la détermination du fait qu'un seuil d'interférence sera atteint après le prêt des une ou plusieurs unités de ressources parmi les une ou plusieurs unités de ressources ; et
déterminer laquelle ou lesquelles des une ou plusieurs unités de ressources sont disponibles pour le prêt en se basant au moins en partie sur la détermination du fait qu'une bande de garde minimale sera toujours présente après avoir prêté une ou plusieurs des unités de ressources.

10. Procédé selon la revendication 8, dans lequel :
l'envoi de l'annonce pour prêter les une ou plusieurs unités de ressources comprend d'envoyer l'annonce,
l'annonce comprenant une carte (300) identifiant les une ou plusieurs unités de ressources et indiquant si les une ou plusieurs unités de ressources identifiées font l'objet de contrats avec des noeuds sans fil tiers qui seront annulés ; et
le procédé comprend en outre de déterminer laquelle ou lesquelles des une ou plusieurs unités de ressources font l'objet de contrats avec des noeuds sans fil tiers qui seront annulés sur la base, au moins en partie, de la détermination d'un ensemble de contrats arrivant à échéance le plus tôt.

11. Procédé selon la revendication 8 comprenant en outre l'étape suivante :
compiler une carte des unités de ressources sur la base au moins en partie sur la demande comprenant une demande d'emprunt d'une unité de ressources qui est incluse dans les ressources spectrales disponibles.

12. Procédé selon la revendication 8 comprenant en outre l'étape suivante :
compiler une carte des unités de ressources (300) sur la base au moins en partie sur la demande comprenant une demande de renouvellement d'un contrat pour emprunter une unité de ressources auprès du premier noeud sans fil.

13. Procédé selon la revendication 8, dans lequel la détermination de la faisabilité technique comprend d'échanger des signaux avec d'autres noeuds sans fil du premier réseau sans fil (102).

14. Procédé selon la revendication 8, dans lequel la détermination de la faisabilité technique comprend d'optimiser la fragmentation des ressources spectrales disponibles.

15. Premier noeud sans fil (1600, 106) dans un premier réseau sans fil (102) comprenant :
un contrôleur (1604) ;
le premier noeud sans fil étant configuré pour :
déterminer que les besoins en ressources spectrales pour le premier réseau sans fil dépassent les ressources spectrales actuellement disponibles pour le premier réseau sans fil ;
recevoir, depuis un second noeud sans fil (116) dans un second réseau sans fil (104), une annonce indiquant la disponibilité de ressources spectrales en termes d'une ou plusieurs unités de ressources ;
déterminer la faisabilité technique (220, 222, 810) d'emprunter les ou plusieurs unités de ressources auprès du second réseau sans fil pour déterminer si le premier réseau sans fil pourrait satisfaire les besoins en ressources spectrales du premier réseau sans fil après avoir emprunté les une ou plusieurs unités de ressources auprès du second réseau sans fil ;
et envoyer, au second noeud sans fil dans le second réseau sans fil, une demande d'emprunt d'une ou plusieurs des une ou plusieurs unités de ressources, la demande étant basée sur les résultats de la détermination.

16. Premier noeud sans fil selon la revendication 15 étant en outre configuré pour exécuter le procédé selon l'une quelconque des revendications 2 à 7.

17. Premier noeud sans fil (1600, 106) dans un premier réseau sans fil (102) comprenant :
un contrôleur (1604) ;
le premier noeud sans fil étant configuré pour :
déterminer que les ressources spectrales actuellement disponibles dépassent les besoins en ressources spectrales pour le premier réseau sans fil ;
déterminer la faisabilité technique d'un prêt de ressources spectrales sous la forme d'une ou de plusieurs unités de ressources à un second réseau sans fil (104) pour déterminer si le premier réseau sans fil pourrait satisfaire les besoins en ressources spectrales du premier réseau sans fil après avoir prêté les une ou plusieurs unités de ressources au second réseau sans fil ;
envoyer, à un second noeud sans fil (112) dans le second réseau sans fil, une annonce pour prêter les une ou plusieurs unités de ressources, l'annonce étant basée sur les résultats de la détermination, et
recevoir du second noeud sans fil situé dans le second réseau sans fil une demande d'emprunt d'une ou plusieurs des une ou plusieurs unités de ressources.

18. Premier noeud sans fil selon la revendication 17 étant en outre configuré pour exécuter le procédé selon l'une quelconque des revendications 9 à 14.

19. Support lisible par ordinateur codé avec des instructions qui, lorsqu'elles sont exécutées par un ordinateur, amènent la réalisation d'un procédé selon l'une quelconque des revendications 1 à 7 ou 8 à 14.
